# EUROPÄISCHE PATENTSCHRIFT

(11) **EP 4 448 233 B1**
(45) Veröffentlichungstag und Bekanntmachung des Hinweises auf die Patenterteilung: **04.02.2026**
(21) Anmeldenummer: 22823400.1
(22) Anmeldetag: 29.11.2022
(51) Int. Cl.: B25J 13/02, B25J 13/06, B25J 19/06

(54) **MODULARES ROBOTERBEDIENHANDGERÄT**
MODULAR HANDHELD ROBOT CONTROL DEVICE
COMMANDE MANUELLE MODULAIRE POUR ROBOT

(30) Priorität: 14.12.2021 DE 102021132953
(43) Veröffentlichungstag der Anmeldung: 23.10.2024
(73) Patentinhaber: KUKA Deutschland GmbH, 86165 Augsburg (DE)
(72) Erfinder: RIEDEL, Martin, 86165 Augsburg (DE); CLAUDER, Tom, 86152 Augsburg (DE); WÖRFEL DE OLIVEIRA, Benjamin, 86153 Augsburg (DE); WÜNSCH, Markus, 86169 Augsburg (DE); WEIGLEIN, Christian, 86199 Augsburg (DE)
(86) Internationale Anmeldenummer: PCT/EP2022/083694
(87) Internationale Veröffentlichungsnummer: WO 2023/110392

(56) Entgegenhaltungen:
- EP-B1- 3 081 347
- WO-A1-2018/091122
- WO-A1-2018/114032
- CN-U- 205 600 738
- DE-B3- 102015 206 578
- DE-B3- 102016 208 811
- DE-B4- 102016 202 881
- DE-B4- 102016 222 675
- DE-B4- 102016 225 688
- US-A1- 2016 297 076
- US-B2- 11 065 770

## Beschreibung

Die EP 3 081 347 B1 beschreibt ein Roboter-Bedienhandgerät, aufweisend ein Gehäuse, das einen handgriffartigen Griffabschnitt aufweist, eine im Gehäuse angeordnete Sicherheits-Grundsteuervorrichtung und wenigstens einen mit dem Gehäuse verbundenen Halter, der zum manuell lösbaren mechanischen Ankoppeln des Gehäuses an ein vom Roboter-Bedienhandgerät verschiedenes, mit der Sicherheits-Grundsteuervorrichtung elektronisch kommunizierendes Gerät ausgebildet ist. Die Erfindung betrifft außerdem zugehörige Geräte und ein System, aufweisend ein solches Roboter-Bedienhandgerät und wenigstens zwei solcher Geräte.

Die DE 10 2015 206 578 B3 beschreibt ein Roboter-Bedienhandgerät, aufweisend ein Gehäuse, das einen handgriffartigen Griffabschnitt aufweist, eine im Gehäuse angeordnete Sicherheits-Grundsteuervorrichtung und wenigstens einen mit dem Gehäuse verbundenen Halter, der zum manuell lösbaren mechanischen Ankoppeln des Gehäuses an ein vom Roboter-Bedienhandgerät verschiedenes, mit der Sicherheits-Grundsteuervorrichtung elektronisch kommunizierendes Gerät ausgebildet ist.

Die DE 10 2016 208 811 B3 beschreibt eine mobile Sicherheits-Grundsteuervorrichtung eines Roboters, aufweisend ein handhaltbares Gehäuse, ein am Gehäuse angeordnetes Nothalt-Schaltmittel, eine Kommunikationsvorrichtung zum steuerungstechnischen Verbinden der mobilen Sicherheits-Grundsteuervorrichtung mit einer Robotersteuerung des Roboters, sowie aufweisend einen mit dem Gehäuse verbundenen Halter, der ausgebildet ist, zum Lagern der mobilen Sicherheits-Grundsteuervorrichtung an einem mobilen Endgerät, das eine Endgeräte-Steuerung und einen Multi-Touchscreen aufweist, der ausgebildet ist, Eingaben über den Multi-Touchscreen an die Endgeräte-Steuerung zu übermitteln.

Die DE 10 2016 222 675 B4 beschreibt ein Roboterbedienhandgerät, aufweisend ein manuell tragbares Gehäuse, einen am manuell tragbaren Gehäuse befestigten Handgriff, ein für eine Einhandbedienung in einer Einhandgriffweite zu dem Handgriff am Gehäuse angeordnetes Eingabemittel, das ausgebildet ist, eine Zustimmeinrichtung zu bilden, bei deren Aktivierung eine mit dem Roboterbedienhandgerät steuerungstechnisch verbundene Robotersteuerung ein handgeführtes Bewegen eines von der Robotersteuerung gesteuerten Roboterarms zulässt und bei einer Deaktivierung der Zustimmeinrichtung die mit dem Roboterbedienhandgerät steuerungstechnisch verbundene Robotersteuerung ein handgeführtes Bewegen des von der Robotersteuerung gesteuerten Roboterarms unterbindet, und eine am manuell tragbaren Gehäuse angeordnete, mehrdimensionale Eingabevorrichtung, die ein manuelles Betätigungsglied aufweist, das in den mehreren Dimensionen bewegbar an einem Basiskörper der mehrdimensionalen Eingabevorrichtung gelagert ist, wobei die mehrdimensionale Eingabevorrichtung wenigstens einen Sensor aufweist, der ausgebildet ist, eine Bewegung des manuellen Betätigungsglieds relativ zum Basiskörper in den mehreren Dimensionen zu erfassen, und der Basiskörper starr im manuell tragbaren Gehäuse befestigt ist.

Aufgabe der Erfindung ist es, ein Roboterbedienhandgerät zu schaffen, durch welche das Roboterbedienhandgerät besonders flexible in unterschiedlichen Konfigurationen genutzt werden kann.

Die Aufgabe wird gelöst durch ein modulares Roboterbedienhandgerät, aufweisend:
- ein Gehäuse in Gestalt eines allgemeinen, geraden Zylinders mit zwei gegenüberliegenden gleichförmigen Stirnwänden und einer die beiden Stirnwände verbindenden Mantelwand,
- eine in dem Gehäuse angeordnete Sicherheits-Grundsteuervorrichtung,
- ein an der Mantelwand des Gehäuses angeordnetes Nothalt-Auslösemittel, das steuerungstechnisch an die Sicherheits-Grundsteuervorrichtung angeschlossen ist,
- eine an der Mantelwand des Gehäuses angeordnete Zustimmungseinrichtung, die steuerungstechnisch an die Sicherheits-Grundsteuervorrichtung angeschlossen ist, und
- ein an der einen Stirnwand ausgebildetes erstes mechanisches Kopplungsmittel sowie ein zu dem ersten mechanischen Kopplungsmittel identisches, an der anderen Stirnwand ausgebildetes zweites mechanisches Kopplungsmittel, derart, dass ein an das modulare Roboterbedienhandgerät mechanisch anzukoppelndes Anschlussmodul wahlweise rechtsseitig des modularen Roboterbedienhandgeräts an das erste mechanische Kopplungsmittel ankoppelbar ist oder linksseitig des modularen Roboterbedienhandgeräts an das zweite mechanische Kopplungsmittel ankoppelbar ist.

Bisherige Roboterbedienhandgeräte weisen unter Anderem Griffe oder Griffabschnitte auf, die durchaus wahlweise rechtshändig oder linkshändig manuell gegriffen werden können. Allerdings besteht bei den bekannten Roboterbedienhandgeräten aufgrund ihrer stets monolithischen Gestaltung immer noch das Problem, dass diese Roboterbedienhandgeräte zwar wahlweise mit der linken Hand oder der rechten Hand einer Person gegriffen werden können, dabei bisher jedoch stets die Funktionalität des Roboterbedienhandgeräts gleichgeblieben ist. Einerseits können die technischen Funktionaltäten nicht geändert und/oder erweitert werden und andererseits bleiben die Funktionalitäten des Roboterbedienhandgeräts auch hinsichtlich ihrer relativen Positionierung unverändert, unabhängig davon, ob das Roboterbedienhandgerät mit der linken Hand oder der rechten Hand gegriffen wird. Die Erfindung ist als ein Roboterbedienhandgerät bezeichnet und wird demgemäß am Beispiel eines Roboters näher erläutert. Das Roboterbedienhandgerät kann allgemein aber auch als Handbediengerät bezeichnet werden, wenn es statt zur Ansteuerung eines Roboter zur Ansteuerung einer anderen Maschine verwendet wird, die in sicherer Technik zu betreiben ist. Eine Ansteuerung einer von einem Roboter verschiedenen Maschine mittels eines erfindungsgemäßen Roboterbedienhandgeräts liegt somit im Rahmen der Erfindung.

Indem das erfindungsgemäße Roboterbedienhandgerät modular aufgebaut ist, d.h. mehrere unterschiedliche Module, Komponenten, Bauelemente oder Baugruppen wahlweise rechtsseitig des Roboterbedienhandgeräts oder linksseitig des Roboterbedienhandgeräts angekoppelt werden können, kann einerseits die technische Funktionalität variiert werden und andererseits die variierte Funktionalität darüber hinaus in Abhängigkeit einer gewünschten Linkshandbedienung und Rechtshandbedienung in beiden spiegelsymmetrischen Konfigurationen zusammengestellt werden.

Dazu ist erfindungsgemäß auch das Gehäuse des neuen Roboterbedienhandgeräts in seinem zentralen Grundkorpus in Gestalt eines allgemeinen geraden Zylinders ausgebildet. Unter einem allgemeinen geraden Zylinder wird im Zusammenhang mit der Erfindung ein Zylinder im mathematischen Sinne verstanden. Dies bedeutet, dass die den allgemeinen geraden Zylinder erzeugende Kurve nicht notwendiger Weise ein Kreis sein muss. Die den allgemeinen geraden Zylinder erzeugende Kurve kann im Allgemeinen jede beliebige geschlossene Kurve sein. Die geschlossene Kurve kann zwar ein Kreis sein. Allerdings kann die geschlossene Kurve auch eine Ellipse, ein Viereck, ein Quadrat, wahlweise mit abgerundeten Ecken oder eine Freiformkurve sein. Die Gestalt der geschlossenen Kurve als Erzeugende des allgemeinen geraden Zylinders kann insbesondere im Hinblick auf ergonomische Aspekte bestimmt sein, speziell auf ergonomische Aspekte der Gestalt einer Hand eines Menschen entsprechend, der das erfindungsgemäße Roboterbedienhandgerät in einer seiner Hände halten soll. Der allgemeine gerade Zylinder entsteht dann durch geometrische Extrusion der geschlossenen Kurve entlang einer Geraden, die senkrecht auf der von der Kurve definierten Fläche steht. Aufgrund einer solchen geometrischen Extrusion ist das Gehäuse dann spiegelsymmetrisch aufgebaut.

Aus einem solchen spiegelsymmetrischen Aufbau des Gehäuses des erfindungsgemäßen Roboterbedienhandgeräts zu seiner Mittenebene werden die zwei gegenüberliegenden gleichförmigen Stirnwände gebildet. Jede Stirnwand trägt ein eigenes mechanisches Kopplungsmittel, wobei die beiden Kopplungsmittel funktional identisch ausgeführt sind.

In dem so gebildeten Gehäuse des erfindungsgemäßen Roboterbedienhandgeräts ist zumindest eine Sicherheits-Grundsteuervorrichtung angeordnet, d.h. darin untergebracht.

Die Sicherheits-Grundsteuervorrichtung weist zumindest ein Nothalt-Auslösemittel, d.h. ein Nothalt-Schaltmittel auf, bei dessen Betätigung ein steuerungstechnisch mit dem Roboterbedienhandgerät verbundener Roboter sofort stillgesetzt, d.h. in sicherer Technik angehalten wird. Die Sicherheits-Grundsteuervorrichtung kann neben dem Nothalt-Auslösemittel außerdem wenigstens eine Zustimmungseinrichtung, und gegebenenfalls wenigstens einen Start-/Stopp-Taster, einen Touch-Up-Taster, ein Betriebsartauswahlmittel und/oder ein Anzeigemittel, insbesondere ein Leuchtmittel aufweisen. Die Start-/Stopp-Taster, Touch-Up-Taster und/oder andere ergänzende Eingabemittel müssen nicht zwingend in sicherer Technik ausgebildet sein, sondern können vielmehr auch in nicht-sicherer Technik ausgebildet sein. Diese können beispielsweise auch frei programmierbare Tasten sein, welchen unterschiedliche gewünschte Funktionalitäten wahlweise durch spezielle Konfiguration zugeordnet werden können. So kann beispielsweise ein Taster zum Öffnen und/oder Schließen eines zugeordneten Greifers oder sonstigen Werkzeugs konfiguriert sein.

Zumindest das Nothalt-Auslösemittel ist in sicherer Technik mit einer Robotersteuerung des Roboters steuerungstechnisch verbindbar, beispielsweise über eine Kommunikationsvorrichtung der Sicherheits-Grundsteuervorrichtung. Demgemäß kann die Sicherheits-Grundsteuervorrichtung ausgebildet sein mit der Robotersteuerung des Roboters zu kommunizieren. Die mobile Sicherheits-Grundsteuervorrichtung kann entweder mittels einer elektrischen Verbindungsleitung mit der Robotersteuerung verbunden sein oder mittels einer drahtlosen Kommunikationsverbindung mit der Robotersteuerung verbunden sein.

Die Sicherheits-Grundsteuervorrichtung kann ausgebildet und/oder eingerichtet sein, die Robotersteuerung des Roboters durch das wenigstens eine Nothalt-Auslösemittel, die wenigstens eine Zustimmungseinrichtung, und/oder den wenigstens einen Start-/Stopp-Taster, den Touch-Up-Taster und/oder das eine Betriebsartauswahlmittel anzusteuern, und zwar auch dann, wenn das erfindungsgemäße Roboterbedienhandgerät gegebenenfalls ohne ein angekoppeltes Anschlussmodul betrieben wird.

Jedes Robotersystem muss gemäß DIN EN ISO 10218-2 die darin beschriebenen Sicherheitsanforderungen erfüllen. Dazu gehört Stoppfunktionen an dem Robotersystem bzw. an Roboterzellen, die auch einen dort beschriebene Not-Halt-Funktion aufweisen müssen, um in einem Gefahrenfall alle Roboterbewegungen und andere gefährdende Funktionen in der Zelle oder an den Schnittstellen zu anderen Bereichen stillsetzen zu können.

Die Not-Halt-Funktion bei Robotern muss die Anforderungen der DIN EN ISO 10218-1 erfüllen und unter Anderem eine Not-Halt-Einrichtung gemäß DIN EN (IEC) 60204-1 aufweisen. Elektrische oder elektronische Steuerkreise, welche ausgebildet und eingerichtet sind die sicherheitstechnischen Anforderungen zu erfüllen, werden auch als Sicherheitskreise bezeichnet.

Das Zuordnen der Not-Halt-Funktionalität zwischen der wenigstens einen Not-Halt-Einrichtung, also einem Nothalt-Auslösemittel und dem wenigstens einen Robotersystem kann dadurch erfolgen, dass die Not-Halt-Einrichtung, beispielsweise ein Not-Aus-Gerät gemäß DIN EN (IEC) 60204-1, in den Sicherheitskreis des wenigstens einen Robotersystems eingebunden wird. Ein solches Einbinden kann erfolgen, indem die Not-Halt-Einrichtung in sicherer Technik elektrisch und funktional an den Sicherheitskreis des Robotersystems angeschlossen wird. Durch ein solches elektrisches und funktionales Anschließen kann bei insbesondere manuellem Auslösen der eingebundenen Not-Halt-Einrichtung das Robotersystem automatisch in einen sicheren Zustand überführt werden, so dass von dem Robotersystem (und von über den gemeinsamen Sicherheitskreis eventuell zugeordneten anderen Maschinen) keine drohende Gefahr mehr ausgehen kann.

Die Zustimmeinrichtung bildet eine Sicherheitsfunktion, die sicherstellen soll, dass eine Person den Roboterarm, beispielsweise im Handfahrbetrieb, stets bewusst ansteuert. Dazu kann die Zustimmeinrichtung einen manuellen Taster aufweisen, der insbesondere drei Schaltzustände aufweisen kann. Ist der manuelle Taster in seiner Ruhestellung, d.h. der manuelle Taster wird nicht durch eine Person betätigt, ist die Zustimmeinrichtung deaktiviert und die mit dem Roboterbedienhandgerät steuerungstechnisch verbundene Robotersteuerung unterbindet in diesem Zustand ein handgeführtes Bewegen des von der Robotersteuerung gesteuerten Roboterarms. Ist der manuelle Taster in seiner Aktivierungsstellung, d.h. der manuelle Taster wird durch eine Person mit einer Betätigungskraft betätigt, die zwischen einer Mindestkraft und einer Maximalkraft liegt, ist die Zustimmeinrichtung aktiviert und die mit dem Roboterbedienhandgerät steuerungstechnisch verbundene Robotersteuerung lässt ein handgeführtes Bewegen eines von der Robotersteuerung gesteuerten Roboterarms zu. Ein dritter Schaltzustand kann sich ergeben, wenn eine Person den manuellen Taster über die Maximalkraft hinaus, also sozusagen krampfhaft überbetätigt, was als eine Notsituation ausgelegt wird und die automatische Folge hat, dass die Zustimmeinrichtung sofort wieder deaktiviert wird und die mit dem Roboterbedienhandgerät steuerungstechnisch verbundene Robotersteuerung in diesem Zustand ein handgeführtes Bewegen des von der Robotersteuerung gesteuerten Roboterarms unmittelbar unterbindet bzw. ein Bewegen unmittelbar abbricht, d.h. alle Gelenke des Roboterarms bis zum Stillstand abgebremst werden. Die Zustimmeinrichtung kann auch als Zustimmschalter oder Zustimmtaster bezeichnet werden.

Das erfindungsgemäße Roboterbedienhandgerät kann insoweit ein Basisbediengerät für den Roboter bilden. Es kann eine Grundfunktionalität für den Roboter bieten, vor allem hinsichtlich einer Sicherheitsfunktionalität.

Das erfindungsgemäße Roboterbedienhandgerät kann auch an eine stationäre Basis, wie beispielsweise einer Wandanschlussbox mechanisch und/oder elektrisch angekoppelt werden. Eine solche ortsfeste Basis kann mit einer Steuervorrichtung und dem Roboterbedienhandgerät in Reihe geschaltet sein, bzw. die ortsfeste Basis kann zwischen der Steuervorrichtung und dem Roboterbedienhandgerät zwischengeschaltet sein. Die ortsfeste Basis kann beispielsweise auch einen ortsfesten Nothalt und/ oder eine zusätzliche Elektronik, wie beispielsweise einen USB-LAN-Wandler aufweisen, um diese beispielsweise aus platzgründen aus dem erfindungsgemäßen Roboterbedienhandgerät ausgelagert zu können.

Aufgrund der geometrischen Extrusion des erfindungsgemäßen Roboterbedienhandgeräts entsteht an dem Gehäuse eine die beiden Stirnwände verbindende Mantelwand. An dieser Mantelwand des Gehäuses ist das Nothalt-Auslösemittel angeordnet, das steuerungstechnisch an die Sicherheits-Grundsteuervorrichtung angeschlossen ist. Außerdem ist zumindest die Zustimmungseinrichtung, die steuerungstechnisch an die Sicherheits-Grundsteuervorrichtung angeschlossen ist, auch an der Mantelwand des Gehäuses angeordnet. Aufgrund der Anordnung des Not-halt-Auslösemittels und der Zustimmungseinrichtung an der Mantelwand des Gehäuses bleiben die beiden gegenüberliegenden Stirnwände des Gehäuses frei, um dort jeweils ein Anschlussmodul ankoppeln zu können, insbesondere vollflächig die jeweilige Stirnwand abdeckend ankoppeln zu können.

Erfindungsgemäß ist an der einen Stirnwand ein erstes mechanisches Kopplungsmittel ausgebildet und an der anderen Stirnwand ein zweites mechanisches Kopplungsmittel ausgebildet. Das zweite mechanische Kopplungsmittel ist dabei zu dem ersten mechanischen Kopplungsmittel identisch ausgebildet.

Eine identische Ausbildung von erstem mechanischen Kopplungsmittel und zweitem mechanischen Kopplungsmittel bedeutet, dass ein an das modulare Roboterbedienhandgerät mechanisch anzukoppelndes (beliebig ausgewähltes) Anschlussmodul wahlweise rechtsseitig des modularen Roboterbedienhandgeräts an das erste mechanische Kopplungsmittel angekoppelt werden kann oder alternativ linksseitig des modularen Roboterbedienhandgeräts an das zweite mechanische Kopplungsmittel angekoppelt werden kann.

Es können verschieden ausgebildete, d.h. unterschiedliche Anschlussmodule vorgesehen sein. Jede verschiedene Art eines Anschlussmoduls kann unterschiedliche Arten und Anzahlen von Eingabemitteln, Ausgabemitteln und/oder steuerungstechnischen Funktionalitäten aufweisen. Jedes individuell ausgewählte Anschlussmodul kann dann wahlweise rechtsseitig des modularen Roboterbedienhandgeräts an das erste mechanische Kopplungsmittel angekoppelt werden oder alternativ linksseitig des modularen Roboterbedienhandgeräts an das zweite mechanische Kopplungsmittel angekoppelt werden.

Statt ein Anschlussmodul an das modulare Roboterbedienhandgerät anzukoppeln, kann auch vorgesehen sein, dass das modulare Roboterbedienhandgerät selbst an ein anderes Gerät oder eine andere Vorrichtung angekoppelt oder zumindest mechanisch mit diesem verbunden wird. So kann das modulare Roboterbedienhandgerät beispielsweise an ein Glied eines Roboterarms, an einen Handflansch eines Roboterarms, an ein vom Roboterarm handzuhabendes Werkzeug oder ein mobiles Fahrzeug angekoppelt werden, und zwar auch hier wahlweise rechtsseitig des modularen Roboterbedienhandgeräts mittels des ersten mechanischen Kopplungsmittels oder alternativ linksseitig des modularen Roboterbedienhandgeräts mittels des zweiten mechanischen Kopplungsmittels.

Das erste mechanische Kopplungsmittel und das zweite mechanische Kopplungsmittel können jeweils ein Formschlusselement aufweisen, welches ausgebildet ist zum axialen Anstecken und axialen Abstecken eines Anschlussmoduls in einer Steckrichtung senkrecht zur jeweils zugeordneten Stirnwand und zum formschlüssigen Arretieren des Anschlussmoduls senkrecht zur Steckrichtung.

Das jeweilige Kopplungsmittel kann demgemäß wenigstens einen Vorsprung und/oder wenigstens eine Vertiefung aufweisen, die analog dem Gehäuse des modularen Roboterbedienhandgeräts ebenfalls geometrisch extrudiert sind. Durch geometrische Extrusion einer geschlossenen Kurve, welche die Gestalt des jeweiligen Kopplungsmittels bestimmt, entlang einer Geraden, die senkrecht auf der von der geschlossenen Kurve definierten Fläche steht, kann die Gestalt des Kopplungsmittels gebildet werden. Im einfachsten Fall kann die Kurve ein Kreis oder ein Ring sein, wodurch als geometrisch extrudierte Gestalt eine gerade kreiszylindrische Gestalt oder eine kreisringförmige bzw. kreisrohrförmige Gestalt des jeweiligen Kopplungsmittels entsteht. Das jeweils anzukoppelnde Anschlussmodul kann eine entsprechend gegenteilige Gestalt aufweisen. Dies bedeutet, dass das Gegenkopplungsmittel des anzukoppelnde Anschlussmodul an die Gestalt des jeweiligen Kopplungsmittels des modularen Roboterbedienhandgeräts in seiner Gestalt korrespondierend ausgebildet ist. Bei einer korrespondierenden Ausbildung der Gestalt des Gegenkopplungsmittels des anzukoppelnde Anschlussmodul und der Gestalt des Kopplungsmittels des modularen Roboterbedienhandgeräts passen das Gegenkopplungsmittel und das Kopplungsmittel nach dem Prinzip Stecker/Buchse bzw. Stecker/Kupplung formschlüssig ineinander. So kann beispielsweise der eine Kopplungspartner (Kopplungsmittel oder Gegenkopplungsmittel) eine gerade kreiszylindrische Gestalt aufweisen mit einer definierten Außenmantelwand und der andere Kopplungspartner (Gegenkopplungsmittel oder Kopplungsmittel) kann dazu eine gerade hohlkreiszylindrische Gestalt aufweisen mit einer definierten Innenmantelwand, welche im zusammengesteckten Zustand von Gegenkopplungsmittel und Kopplungsmittel in Art einer Passung zusammenpassen. Das Kopplungsmittel und das Gegenkopplungsmittel können außerdem zusammenwirkende Rastmittel oder Schnappverbindungen aufweisen, welche ausgebildet sein können ein unbeabsichtigtes voneinander Lösen zu verhindern. In einer Abwandlung kann das Kopplungsmittel und/oder das Gegenkopplungsmittel aber beispielsweise auch einen Magneten aufweisen, welcher in Zusammenwirken mit einem anderen Magneten oder einem Metallelement an dem anderen Kopplungspartner eine kraftschlüssige Verbindung in axialer Richtung, der Steckrichtung, schafft, so dass sich Kopplungsmittel und Gegenkopplungsmittel nicht unbeabsichtigt voneinander lösen können.

Das Kopplungsmittel und/oder das Gegenkopplungsmittel können unterschiedlich stark die jeweiligen Kopplungspartner miteinander verbinden. Damit können diese auch unterschiedlich schwer lösbar sein, Dies ist beispielsweise dann zweckmäßig, wenn mehrere Module verbunden sollen und eine Trennung zweier bestimmter Kopplungspartner vorranging, d.h. zuerst erfolgen soll. So kann vorgesehen sein, dass beispielsweise ein Tabletcomputer sich zuerst abtrennt. Dies kann beispielsweise realisiert werden über unterschiedlich starke magnetische Verbindungen oder unter Hinzunahme von unterschiedlich auslösenden zusätzlichen Sperrelementen.

Das erste mechanische Kopplungsmittel und das zweite mechanische Kopplungsmittel können jeweils zentral in einem Mittenflächenabschnitt der jeweils zugeordneten Stirnwand angeordnet sein und jeweils von einer an der jeweils zugeordneten Stirnwand ausgebildeten, den jeweiligen Mittenflächenabschnitt umgebenden Stützfläche eingefasst sein.

Die Gesamtfläche der jeweiligen Stirnwand kann deutlich größer sein als die flächige Ausdehnung des jeweiligen mechanischen Kopplungsmittels (erstes mechanisches Kopplungsmittel oder zweites mechanisches Kopplungsmittel) selbst. Dies hat zur Folge, dass das jeweils anzukoppelnde Anschlussmodul großflächig an der jeweiligen angekoppelten Stirnwand des modularen Roboterbedienhandgeräts anliegen kann. Dies bewirkt unter anderem ein vollflächiges, kippfreies Anliegen des Anschlussmoduls an dem modularen Roboterbedienhandgerät. Zusätzlich werden belastende Biegekräfte und/oder Kippkräfte verhindert und insoweit von dem mechanischen Kopplungsmittel und dem Gegenkopplungsmittel ferngehalten. Eine Randkante der jeweiligen Stirnwand kann einen umlaufenden Dichtungsabschnitt aufweisen. Der Dichtungsabschnitt kann beispielsweise in Art einer umlaufenden Dichtung an der Stirnwand angebracht sein. Beispielsweise kann eine separat hergestellte Dichtung auf der Stirnwand befestigt werden, beispielsweise durch Kleben. Alternativ kann die umlaufende Dichtung, im Falle eines Gehäuses aus Kunststoff, beispielsweise auch in Form eines thermoplastischen Elastomer-Werkstoffs direkt bei der Herstellung an die Stirnwand angeformt werden, beispielsweise im Zweikomponenten-Spritzgießverfahren. Aufgrund einer derartigen Dichtung kann das Anschlussmodul spaltfrei und folglich staubdicht an das modulare Roboterbedienhandgerät angekoppelt werden.

Das erste mechanische Kopplungsmittel und das zweite mechanische Kopplungsmittel können jeweils von einem zentralen Dom gebildet werden, der in einer Vertiefung der jeweils zugeordneten Stirnwand angeordnet ist und aus dem Grund der Vertiefung nach außen vorspringt.

Aufgrund der Ausbildung des ersten mechanischen Kopplungsmittels und des zweiten mechanischen Kopplungsmittels als zentraler Dom wird ein Vorsprung geschaffen, welcher insoweit einen Stecker bildet, an den das Anschlussmodul in einfacher Weise angesteckt werden kann. Da der Dom in einer Vertiefung der jeweils zugeordneten Stirnwand angeordnet ist, springt der Dom dennoch nicht oder allenfalls nur geringfügig über die Ebene der Stirnwand nach außen über bzw. allenfalls nur geringfügig über die Stützfläche nach außen über, welche den jeweiligen Mittenflächenabschnitt umgibt.

Das erste mechanische Kopplungsmittel und das zweite mechanische Kopplungsmittel können optional jeweils zu einer senkrecht zur Ebene der jeweils zugeordneten Stirnwand ausgerichteten Symmetrieachse, d.h. die Steckachse, rotationssymmetrisch ausgebildet sein, derart dass das jeweils anzukoppelnde Anschlussmodul in mehreren verschiedenen Drehstellungen an das modulare Roboterbedienhandgerät ankoppelbar ist. Falls eine Drehbarkeit des Anschlussmoduls relativ zum modularen Roboterbedienhandgerät nicht gewünscht ist und demgemäß verhindert werden soll, kann dem ersten mechanischen Kopplungsmittel und dem zweiten mechanischen Kopplungsmittel jeweils ein Sperrvorsprung oder eine Sperrrippe zugeordnet, beispielsweise in Art einer radial vorspringen Nase, so dass ein Drehen zuverlässig verhindert ist.

Die Mantelwand kann einen oberen Mantelaußenflächenabschnitt, einen unteren Mantelaußenflächenabschnitt, einen vorderen konvexen Mantelaußenflächenabschnitt, der einen Fingeranlagebereich bildet, und einen hinteren konkaven Mantelaußenflächenabschnitt, der einen Handballenanlagebereich bildet, aufweisen. Die konkaven und konvexen Flächen können auch von Freiformflächen gebildet werden. Solche Freiformflächen können dann in ergonomischer Weise an die Form einer Hand eines Menschen angepasst sein.

Anders ausgedrückt kann das Gehäuse eine Grundform aufweisen, welche zumindest im Wesentlichen der Form eines dreidimensionalen Ringsegments entspricht. Die konkave Form, insbesondere ein Krümmungsradius des hinteren konkaven Mantelaußenflächenabschnitts kann an die Form eines Handballens der Hand eines Menschen angepasst sein bzw. dieser entsprechen. In einem solchen Sinne kann auch der vordere konvexe Mantelaußenflächenabschnitt einen Krümmungsradius aufweisen, der an die Lage von teilweise gekrümmten Fingern der Hand eines Menschen angepasst ist bzw. deren Positionen entspricht, wenn das modulare Roboterbedienhandgerät in der Hand gehalten wird. Der vordere konvexe Mantelaußenflächenabschnitt kann insoweit sich koaxial in einem Abstand zum hinteren konkaven Mantelaußenflächenabschnitt erstrecken.

Das modulare Roboterbedienhandgerät kann einen abnehmbaren Adapter aufweisen, welcher ein zu dem ersten mechanischen Kopplungsmittel und zu dem zweiten mechanischen Kopplungsmittel des modularen Roboterbedienhandgeräts formergänzend korrespondierendes Gegenkopplungsmittel aufweist, und welcher wenigstens ein weiteres mechanisches Kopplungsmittel aufweist, das zu dem ersten mechanischen Kopplungsmittel und zu dem zweiten mechanischen Kopplungsmittel des modularen Roboterbedienhandgeräts identisch ist.

Das Gegenkopplungsmittel des Adapters dient dazu, den Adapter an dem ersten mechanischen Kopplungsmittel oder an dem zweiten mechanischen Kopplungsmittel des modularen Roboterbedienhandgeräts ankoppeln zu können. Das wenigstens eine weitere mechanische Kopplungsmittel des Adapters bildet dann einen Ankoppelpunkt für ein Anschlussmodul. Dies bedeutet, dass der Adapter das jeweilige Anschlussmodul mit dem modularen Roboterbedienhandgerät verbindet, indem der Adapter zwischen dem Anschlussmodul und dem modularen Roboterbedienhandgerät zwischengefügt ist. Die relative Position und/oder Lage des Gegenkopplungsmittels des Adapters bezüglich des weiteren mechanischen Kopplungsmittels des Adapters bestimmt dann die relative Lage des angekoppelten Anschlussmodul bezüglich des modularen Roboterbedienhandgeräts. Insofern können dabei das Gegenkopplungsmittel des Adapters und das weitere mechanische Kopplungsmittel des Adapters beispielsweise bezüglich der Steckrichtungen achsversetzt oder sogar winkelig zueinander angeordnet sein.

An der Mantelwand des modularen Roboterbedienhandgeräts kann wenigstens ein erstes Leuchtmittel angeordnet sein und/oder an wenigstens einer der beiden Stirnwände des modularen Roboterbedienhandgeräts kann wenigstens ein zweites Leuchtmittel angeordnet sein. Das wenigstens eine erste Leuchtmittel und/oder das wenigstens eine zweite Leuchtmittel kann wenigstens ein LED-Bauelement umfassen. Im Falle des wenigstens einen zweiten Leuchtmittels kann ein LED-Bauelement oder es können mehrere LED-Bauelemente entlang eines koaxial zum jeweiligen Kopplungsmittel auf der jeweiligen Stirnwand des Gehäuses angeordneten Kreisringes verlaufend positioniert sein. Das LED-Bauelement kann insoweit aus mehreren auf einem Kreis in Abständen voneinander angeordnete Leuchtringsegmente umfassen oder das LED-Bauelement kann ringförmig leuchtend ausgebildet sein. Ein erstes Leuchtmittel kann dem Nothalt-Auslösemittel zugeordnet sein. Insbesondere kann ein ringförmig leuchtendes erstes Leuchtmittel um das Nothalt-Auslösemittel umlaufend angeordnet sein. Ein weiteres erstes Leuchtmittel kann der Zustimmeinrichtung und/oder weiteren Eingabemittels örtlich zugeordnet sein.

Das modulare Roboterbedienhandgerät kann ein Halteband aufweisen, welches einen Bandschlaufenabschnitt umfasst, der ausgebildet ist über den Handrücken einer Hand einer Person zu laufen, wenn die Person das modulare Roboterbedienhandgerät in der Hand hält, und der Bandschlaufenabschnitt an ein Anschlussglied angebunden ist, welches ein zu dem ersten mechanischen Kopplungsmittel und zu dem zweiten mechanischen Kopplungsmittel des modularen Roboterbedienhandgeräts formergänzend korrespondierendes Gegenkopplungsglied aufweist, welches ausgebildet ist, den Bandschlaufenabschnitt an dem modularen Roboterbedienhandgerät zu halten, wenn das Halteband an dem modularen Roboterbedienhandgerät befestigt ist.

Das Halteband kann beispielsweise eine feste Trägerplatte als Anschlussglied aufweisen, welche an ihrer Außenseite das zu dem ersten mechanischen Kopplungsmittel und zu dem zweiten mechanischen Kopplungsmittel des modularen Roboterbedienhandgeräts formergänzend korrespondierendes Gegenkopplungsglied aufweist. Eine Innenseite der Trägerplatte kann Mulden, Rinnen und/oder vorspringende Rippen aufweisen, welche ergonomisch an die Gestalt einer Hand bzw. den nebeneinanderliegenden Fingern einer Hand angepasst sind, um einen guten Halt an einer Hand einer Person zu gewährleisten. An gegenüberliegenden Randabschnitten der Trägerplatte kann der Bandschlaufenabschnitt festgelegt sein. Der Bandschlaufenabschnitt kann in seiner Länge einstellbar gestaltet sein. Der Bandschlaufenabschnitt kann aus einem elastischen Material hergestellt sein. Der Bandschlaufenabschnitt kann beispielsweise ein textiles Gummiband sein.

Nicht mehr erfindungsgemäß ist, dass die Aufgabe wird in Verbindung mit einem modularen Roboterbedienhandgerät auch gelöst durch ein zugehöriges Anschlussmodul, das als ein vom modularen Roboterbedienhandgerät nach einer der beschriebenen Ausführungsformen separates Gerät aus der Gruppe von Geräten umfassend einen Tablet-Computer, eine Computertastatur, eine Computermaus, einen Joystick, Jog-Shuttle und einen Jog-Dail, ausgebildet ist und ein Modul-Gehäuse aufweist, das ein zu dem ersten mechanischen Kopplungsmittel und zu dem zweiten mechanischen Kopplungsmittel eines modularen Roboterbedienhandgeräts nach einer der beschriebenen Ausführungsformen formergänzend korrespondierendes Modul-Gegenkopplungsmittel aufweist.

Jedes Anschlussmodul kann ein Modulgrundgehäuse aufweisen, welches eine zum Gehäuse des modularen Bedienhandgeräts gleichförmige Kontur aufweist. Dies bedeutet, dass das Modulgrundgehäuse eine Mantelwand aufweisen kann, welche aus derselben Kurve geometrisch extrudiert ist, wie auch das Gehäuse des modularen Bedienhandgeräts aus dieser selben Kurve geometrisch extrudiert ist. Die in Extrusionsrichtung weisenden Dicken der Modulgrundgehäuse kann unterschiedlich sein.

Jedes Anschlussmodul bzw. jede Art von Anschlussmodul bildet ein vom modularen Roboterbedienhandgerät separates Gerät, das je nach Art unterschiedliche Funktionen aufweisen kann. So können an verschiedenen Anschlussmodulen unterschiedlicher Art unterschiedliche Arten und Anzahlen von Sensoren, Eingabemitteln, Ausgabemitteln, wie beispielsweise Leuchtmittel und/oder Steuerungselektroniken vorgesehen sein.

Jede Art von Anschlussmodul kann beispielsweise aus der Gruppe von Geräten umfassend einen Tablet-Computer, eine Computertastatur, eine Computermaus, einen Joystick, Jog-Shuttle und einen Jog-Dail gebildet werden. Das Anschlussmodul kann aber auch ein VR-Brillen-Controller oder ein AR-Brillen-Controller sein.

Mechanische Eingabemittel können auch mit einem Zwischenadapter beispielsweise direkt am Rand eines Tablet-Computers zu befestigen sein.

Das erfindungsgemäße Roboterbedienhandgerät kann auch ein mechanisches Eingabemittel, wie beispielsweise einen Joystick aufweisen, der mit einem Kopplungsmittel versehen ist, so dass auch der Joystick direkt an einen Roboter andockbar ist, um beispielsweise diesen ggf. nicht sensitiven Roboter handführen zu können. Dabei können auch Andockpunkt auf einem Musterwerkstück anbringbar sein, um ein initiales Teachen des Prozesses zu ermöglichen.

Ein Anschlussmodul mit einem Joystick kann beispielsweise ein Modulgrundgehäuse aufweisen, das an seiner Unterseite das Modul-Gegenkopplungsmittel aufweist und an seiner Oberseite ein Eingabemittel aufweist, das von einem Handknopf oder Handhebel gebildet wird, der insbesondere in 3 Freiheitsgraden oder in 6 Freiheitsgraden bewegt werden kann, um in jeder Bewegungsrichtung ein zugeordnetes elektrisches Signal zu erzeugen, das zum Ansteuern von elektronischen Funktionen verwendet werden kann.

Ein Anschlussmodul mit einem Jog-Shuttle oder einem Jog-Dail kann analoge Funktionalitäten wie ein Joystick aufweisen und dabei ersatzweise oder ergänzend eine Drehfunktionalität in Art eines Drehstellers aufweisen. Ein solches Anschlussmodul kann auch ein entsprechendes Modulgrundgehäuse aufweisen, das an seiner Unterseite das Modul-Gegenkopplungsmittel aufweist und an seiner Oberseite ein Eingabemittel aufweist, das beispielsweise von einer kreiszylindrischen Scheibe gebildet wird, die in mehreren Freiheitsgraden inklusive einem Drehen um deren Rotationsachse bewegt werden kann, um in jeder entsprechenden Bewegungsrichtung ein zugeordnetes elektrisches Signal zu erzeugen, das zum Ansteuern von elektronischen Funktionen verwendet werden kann.

Eine andere Art von Anschlussmodul kann in Art einer Computer-Tastatur ausgebildet sein und demgemäß eine Vielzahl von einzelnen Tasten aufweisen. Jeder Taste kann dabei ein Buchstabe des Alphabets oder eine Zahl zugeordnet sein, oder eine gruppe von mehreren Buchstabe des Alphabets oder eine Zahl zugeordnet sein, die wahlweise ausgewählt werden können, beispielsweise aufgrund von einmaligem oder entsprechend mehrmaligem Drücken der jeweiligen Taste.

Alle verschiedenen Arten von Anschlussmodulen haben jedoch die Gemeinsamkeit, dass sie alle ein zu dem ersten mechanischen Kopplungsmittel und zu dem zweiten mechanischen Kopplungsmittel des modularen Roboterbedienhandgeräts nach einer der beschriebenen Ausführungsformen formergänzend korrespondierendes Modul-Gegenkopplungsmittel aufweisen. Dies ermöglicht es erst, dass jedes der verschiedenen Arten von Anschlussmodulen wahlweise an dem modularen Roboterbedienhandgerät angekoppelt werden können.

Der neuartige Ansatz zur Bedienung von Robotern sieht somit einen modularen Baukasten vor, der adaptiv und situationsgerecht vom Benutzer erweitert und/oder temporär angepasst werden kann. Die Basis dieses Baukastens bietet die kompakte und minimalistische Einheit des modularen Roboterbedienhandgeräts, der über eine gewisse Anzahl an Grundtasten, wie beispielsweise den sicheren Nothalt, die sichere Zustimmtaste, und optional weitere Eingabemittel, wie beispielsweise eine Start-/Stopp-Taste und/oder eine Touch-Up-Taste verfügen kann. Des Weiteren besitzt das modulare Roboterbedienhandgerät mindestens zwei gegenüberliegende mechanische Schnittstellen, die Kopplungsmittel zur Verbindung mit weiteren Anschlussmodulen. Darüber hinaus können an der Basis des modularen Roboterbedienhandgeräts eine oder mehrere elektrische Schnittstellen, wie beispielsweise eine USB-Schnittstelle oder und ähnliche Kommunikations-Schnittstellen vorhanden sein, um Daten zu transferieren, Energie zu übertragen und/oder Koppelungspartner, d.h. angekoppelte Anschlussmodule zu identifizieren.

Ein einfaches LED-Leuchtelement z.B. in Form eines in das Gehäuse integrieren Lichtringes kann gegebenenfalls zur rückseitigen Illumination eines teiltransparenten Gehäuseelements den Grundfunktionsumfang des modularen Roboterbedienhandgeräts abrunden. Der beispielhafte Lichtring oder die beiden Lichtringe können in den identisch ausgebildeten Seitenwänden des modularen Roboterbedienhandgeräts angeordnet sein und können je nach Einbaurichtung entweder indirekt nach innen oder direkt nach außen leuchten. Die Ausrichtung nach innen kann beispielsweise eine transparente bzw. mattiert transparente Mantelwand des Gehäuses des modularen Roboterbedienhandgeräts illuminieren. Eine Ausrichtung nach außen kann in die Aussparungen der Stirnwände hineinscheinen, die beispielsweise in Form eines Musters oder Logos lokal eine besonders dünnen lichtdurchlässige Wandstärke besitzen kann.

In einer ersten Variante kann das modulare Roboterbedienhandgerät kabelgebunden mit einer Roboter-Steuerung verbunden werden. Das modulare Roboterbedienhandgerät kann aber auch in weiteren Varianten eine Funkverbindung und beispielsweise einen aufladbaren elektrischen Energiespeicher, wie beispielsweise einen Akku aufweisen.

Der Grundaufbau des modularen Roboterbedienhandgeräts ist so reduziert und platzsparend wie möglich gestaltet und bietet durch die Formgebung und Tastenverteilung eine ausreichend gute Ergonomie sowohl zum Halten des modulares Roboterbedienhandgeräts als auch in weiteren Interaktionsszenarien mit dem modulares Roboterbedienhandgerät.

Eine spezielle Besonderheit ist sein im Wesentlichen zur Mittelebene symmetrischer Aufbau, der sowohl eine Rechtshandbenutzung als auch eine Linkshandbenutzung gleichermaßen ermöglicht. Dies bedeutet auch, dass die mechanische Schnittstelle, d.h. die Kopplungsmittel beidseitig und vorzugsweise symmetrisch angeordnet sein und ein Koppeln von unterschiedlichen Anschlussmodulen an beiden Seiten ermöglicht. Die Kopplungsmittel können optional insbesondere so zurückgesetzt angeordnet sein, dass beim Ankoppeln das angekoppelte Anschlussmodul auf der planen Seitenfläche des modulares Roboterbedienhandgeräts anliegt. Die Anlagefläche kann dabei insbesondere möglichst weit außen liegen und verleiht dadurch der Koppelpaarung zusätzliche Stabilität. Zudem ist durch das Anliegen gewährleistet, dass keine Abstände zwischen dem modulares Roboterbedienhandgerät und dem gekoppelten Anschlussmodul entstehen. Wird beispielsweise ein Tablet-Computer als Anschlussmodul angekoppelt, so kann durch ein enganliegendes modulares Roboterbedienhandgerät die Halteergonomie für die Person weiter verbessert werden, wenn der Tablet-Computer unmittelbar neben der Hand der Person auch auf dem Unterarm der Person aufliegen kann.

Eine Koppelung von modularem Roboterbedienhandgerät und Anschlussmodul kann kraft- und/oder formschlüssig erfolgen und kann unter anderem Magnete, Federn und/oder mechanische Sperrelemente beinhalten. Der Koppelvorgang erfolgt beispielsweise einhändig durch ein einfaches Aufschieben in Stoß- oder Querrichtung, gegebenenfalls gefolgt von einem Verdrehen um die Stoßrichtung, ähnlich einem Bajonettverschluss. Ein Lösen erfolgt analog rückwärts, kann jedoch in einer Ausprägungsform einen Entsperrvorgang beinhalten.

Die Kopplungseinheit kann neben einer rein mechanischen Funktion auch eine elektrische Kopplung ermöglichen, indem eine Steckerverbindung oder eine Federkontaktverbindung im Bereich des jeweiligen Kopplungsmittels integriert ist.

Das modulare Roboterbedienhandgerät kann statt mit einem Anschlussmodul, insbesondere auch anderweitig angebunden werden.

Das modulare Roboterbedienhandgerät kann beispielsweise auch an ein Glied eines Roboters angekoppelt werde. Ein Gegenkopplungsmittel kann beispielsweise an dem Roboter befestigt sein, insbesondere distal hinter der letzten Handachse. Bei einer temporären Kopplung des modularen Roboterbedienhandgeräts an ein Glied des Roboterarms, kann ein Handführen mit einer Hand bei betätigter Zustimmeinrichtung möglich sein.

Das modulare Roboterbedienhandgerät kann beispielsweise auch an ein Roboter-Zelle, d.h. an eine feste Komponente der Roboter-Zelle angekoppelt werden. Das Gegenkopplungsmittel kann dazu auf einem Träger oder Säule befestigt sein, welche sich direkt in oder an der Zelle befindet. Diese kann auch als Aufbewahrungsstelle für das modulare Roboterbedienhandgerät bei Nichtbenutzung dienen.

Das Anschlussmodul kann auch ein Display-Modul sein. Ein solches Display-Modul kann beispielsweise ein minimalistisches Display, gegebenenfalls mit eine Touch-Funktionalität aufweisen.

Das Anschlussmodul kann gegebenenfalls auch ein handelsübliches Smart-Phone sein, wenn es mit einem Gegenkopplungsmittel ausgerüstet wurde.

Das Anschlussmodul kann auch ein Messmittel sein. Zusätzliche Elemente, die beispielsweise zum Einmessen oder Erfassen von Posen im Raum genutzt werden sollen, z.B. Messmarken mit Messspitzen, können über die Kopplungsmittel an das modulare Roboterbedienhandgerät angeschlossen werden, insbesondere um so eine vereinfachte Handhabung mit Einbeziehung der Hardwaretasten zu ermöglichen.

Bei Eingabemitteln, die richtungssensitiv gehalten werden können, wie beispielsweise eine 6D-Maus, kann ein Beschleunigungssensor die Ausrichtung erfassen und die Raumrichtungen und Eingaberichtungen richtig verknüpfen.

Hinsichtlich einer möglichen Anforderung an ein "Single Point of Control" kann es erforderlich sein, dass sich das modulare Roboterbedienhandgerät in der Nähe der betreffenden Maschine, insbesondere des Roboters befinden muss, insbesondere an einem Ort befinden soll, wo die miteinander verbunden werden können.

Dies kann erreicht werden, indem beispielsweise der Tablet-Computer und das modulare Roboterbedienhandgerät mit einem Kabel, insbesondere mit einem in der Länge limitieren USB-Kabel verbunden sind. Alternativ kann ein Taster am modularen Roboterbedienhandgerät mechanisch codiert sein, beispielsweise nach dem Schlüssel-Schloss-Prinzip, und über das Kopplungsmittel vom Tablet-Computer betätigt werden. Des Weiteren kann ein elektrischer Schaltkreis im modularen Roboterbedienhandgerät über eine leitende Brücke im Kopplungsmittel mit dem Tablet-Computer verbunden werden.

Ein NFC-Reader im modularen Roboterbedienhandgerät kann einen Tag am Anschlussmodul detektiert. Alternativ oder ergänzend kann ein NFC-Reader im Tablet-Computer angeordnet sein und einen Tag im modularen Roboterbedienhandgerät detektieren. Beispielsweise über einen Bluetooth-Sender im modularen Roboterbedienhandgerät kann auch eine Entfernung zum Tablet-Computer geschätzt werden. Ein Magnetsensor im modularen Roboterbedienhandgerät kann einen Magneten im Anschlussmodul detektieren.

Des Weiteren kann vor einer Programmausführung, dieses Programm mittels des Tablet-Computers ausgewählt und vorbereitet werden. Eine Bestätigung schickt den "Ready"-Befehl an die Steuerung. Signalleuchten am modulares Roboterbedienhandgerät und Roboter können, z.B. durch Blinken, eine Losfahrbereitschaft signalisieren und zeigen nochmals die korrekte Zuordnung des modularen Roboterbedienhandgeräts zum Roboter. Durch Betätigen einer Start-Taste am modularen Roboterbedienhandgerät kann beispielsweise die Bewegung dann final gestartet, d.h. autorisiert werden.

Soll das modulare Roboterbedienhandgerät in Verbindung mit einem tragbaren Computer, wie einem Notebook verwendet werden, können vergleichbare Erkennungen verwendet werden, wie beispielsweise kurze Kabel oder NFC-Reader am Notebook, an welches das modulare Roboterbedienhandgerät angekoppelt werden muss, um eine Bewegung über das Notebook starten zu können.

Analog zur Koppelpaarungserkennung des modularen Roboterbedienhandgeräts mit einem Tablet-Computer kann auch die Koppelpaarung des modularen Roboterbedienhandgeräts an den Roboter detektiert werden, beispielsweise um automatisch in den Programmmodus des Handführens wechseln zu können.

Ein am Roboter befestigtes modulares Roboterbedienhandgerät kann ein Querführungselement besitzen, welches bei axialem Kontakt einfedert und zurückweicht. Dadurch können punktuelle Stöße vermieden werden. Bei Kopplung mit dem modulares Roboterbedienhandgerät wird das Führungselement hingegen nicht eingedrückt, sondern kann die Koppelpaarung in Querrichtung ausreicht abstützen.

Das modulare Roboterbedienhandgerät kann über ein Kabel oder per Funk entweder direkt mit der Steuerung kommunizieren oder mit einem in der Nähe des Roboters festmontiertes Wandgerät verbunden werden, das seinerseits direkt mit der Steuerung verbunden sein kann. Ein solches Wandgerät kann über ein zusätzlichen Nothalt-Schaltmittel verfügen, mit dem der Nothalt des modularen Roboterbedienhandgeräts in Reihe geschaltet werden kann. Des Weiteren kann das Wandgerät ein oder mehrere elektrische Schnittstellen aufweisen, an die das modulare Roboterbedienhandgerät oder weitere Peripherie oder eines der Anschlussmodule angeschlossen werden kann. Ebenso können bauraumintensive elektronische Bauelemente, wie insbesondere die Ansteuerungselektronik der LEDs aus dem sehr begrenzten Bauraum des modulares Roboterbedienhandgeräts in das Wandgerät ausgelagert werden.

Konkrete Ausführungsbeispiele der Erfindung sind in der nachfolgenden Beschreibung unter Bezugnahme auf die beigefügten Figuren näher erläutert.

Es zeigen:
- Fig. 1: eine perspektivische Darstellung einer beispielhaften konkreten Ausführungsform eines modularen Roboterbedienhandgeräts,

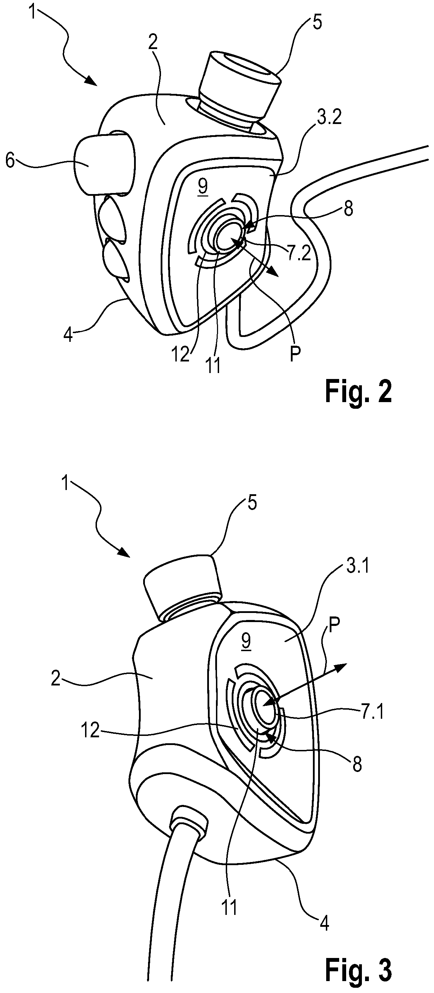

- Fig. 2: eine perspektivische Darstellung des modularen Roboterbedienhandgeräts gemäß Fig. 1 in einer Ansicht von links,
- Fig. 3: eine perspektivische Darstellung des modularen Roboterbedienhandgeräts gemäß Fig. 1 in einer Ansicht von rechts,
- Fig. 4: eine schematische Übersicht verschiedener beispielhafter Module, die an das modulare Roboterbedienhandgerät gemäß Fig. 1 wahlweise ankoppelbar sind,
- Fig. 5: eine Darstellung einer möglichen geometrischen Ausformung des modularen Roboterbedienhandgeräts gemäß Fig. 1 zur ergonomischen Anpassung an die Hand einer Person,
- Fig. 6: eine Darstellung einer beispielhaften manuellen Griffweise des modularen Roboterbedienhandgeräts gemäß Fig. 1 bei anliegendem Daumen in einer Ansicht von links,
- Fig. 7: eine Darstellung einer beispielhaften manuellen Griffweise des modularen Roboterbedienhandgeräts gemäß Fig. 1 bei anliegendem Daumen in einer Ansicht von rechts,
- Fig. 8: eine Darstellung einer beispielhaften manuellen Griffweise des modularen Roboterbedienhandgeräts gemäß Fig. 1 bei gestrecktem Daumen zur Betätigung eines Not-Halt-Schaltmittels in einer Ansicht von links,
- Fig. 9: eine Darstellung einer beispielhaften manuellen Griffweise des modularen Roboterbedienhandgeräts gemäß Fig. 1 bei gestrecktem Daumen zur Betätigung eines Not-Halt-Schaltmittels in einer Ansicht von rechts,
- Fig. 10: eine Darstellung des modularen Roboterbedienhandgeräts gemäß Fig. 1, welches mit einem ersten Leuchtmittel ausgestattet ist,
- Fig. 11: eine Darstellung des modularen Roboterbedienhandgeräts gemäß Fig. 1, welches mit einem zweiten Leuchtmittel ausgestattet ist,
- Fig. 12: eine schematische Übersicht mehrerer Module, die an das modulare Roboterbedienhandgerät gemäß Fig. 1 wahlweise ankoppelbar sind,
- Fig. 13: eine schematische Übersicht, wie ein beispielhaftes Zwischenmodul das modulare Roboterbedienhandgerät gemäß Fig. 1 an einen Roboterarm ankoppelbar kann,
- Fig. 14: eine schematische Übersicht mehrerer beispielhafter Modulkombinationen des modularen Roboterbedienhandgeräts gemäß Fig. 1,
- Fig. 15: eine perspektivische Ansicht eines Tablet-Computers von hinten mit dem angekoppelten modularen Roboterbedienhandgerät gemäß Fig. 1,
- Fig. 16: eine perspektivische Darstellung einer Person, welche den Tablet-Computer gemäß Fig. 15 über das angekoppelte modulare Roboterbedienhandgerät gemäß Fig. 1 in der Hand halten kann,
- Fig. 17: eine schematische Übersicht verschiedener beispielhafter Module, die zusammen mit dem modularen Roboterbedienhandgerät gemäß Fig. 1 wahlweise an den Tablet-Computer gemäß Fig. 15 ankoppelbar sind,
- Fig. 18: eine perspektivische Darstellung einer Person, welche einen Roboterarm mittels des angekoppelten modularen Roboterbedienhandgeräts gemäß Fig. 1 handführt,
- Fig. 19: eine perspektivische Darstellung einer Person, welche einen an das modulare Roboterbedienhandgerät gemäß Fig. 1 angekoppelte modularen Joystick bedient,
- Fig. 20: eine perspektivische Darstellung des modularen Roboterbedienhandgeräts gemäß Fig. 1 mit einer angekoppelten Handschlaufe, in einer Ansicht von vorne,
- Fig. 21: eine perspektivische Darstellung des modularen Roboterbedienhandgeräts gemäß Fig. 1 mit der angekoppelten Handschlaufe gemäß Fig. 20, in einer Ansicht von hinten, und
- Fig. 22: eine Explosionsdarstellung mehrerer Komponenten des modularen Roboterbedienhandgeräts gemäß Fig. 1.

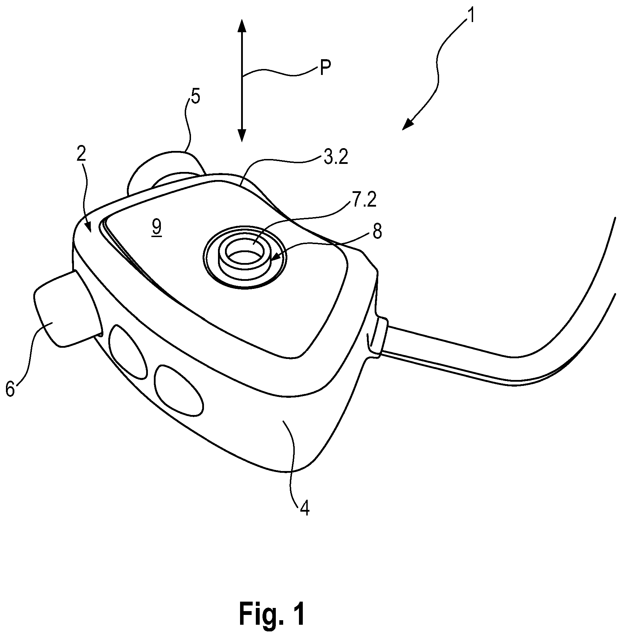

In der Fig. 1 ist ein konkretes Ausführungsbeispiel eines modularen Roboterbedienhandgeräts 1 dargestellt. Das modulare Roboterbedienhandgerät 1 weist ein Gehäuse 2 in Gestalt eines allgemeinen, geraden Zylinders mit zwei gegenüberliegenden gleichförmigen Stirnwänden 3.1, 3.2 und einer die beiden Stirnwände 3.1, 3.2 verbindenden Mantelwand 4 auf.

Das modulare Roboterbedienhandgerät 1 weist eine in dem Gehäuse 2 angeordnete Sicherheits-Grundsteuervorrichtung auf.

Das modulare Roboterbedienhandgerät 1 weist außerdem ein an der Mantelwand 4 des Gehäuses 2 angeordnetes Nothalt-Auslösemittel 5 auf, das steuerungstechnisch an die Sicherheits-Grundsteuervorrichtung angeschlossen ist, und eine ebenfalls an der Mantelwand 4 des Gehäuses 2 angeordnete Zustimmungseinrichtung 6 auf, die auch steuerungstechnisch an die Sicherheits-Grundsteuervorrichtung angeschlossen ist.

Ein an der einen Stirnwand 3.1 ausgebildetes erstes mechanisches Kopplungsmittel 7.1 sowie ein zu dem ersten mechanischen Kopplungsmittel 7.1 identisches, an der anderen Stirnwand 3.2 ausgebildetes zweites mechanisches Kopplungsmittel 7.2 sind gegenüberliegend angeordnet, derart, dass ein an das modulare Roboterbedienhandgerät 1 mechanisch anzukoppelndes Anschlussmodul 10 wahlweise rechtsseitig des modularen Roboterbedienhandgeräts 1 an das erste mechanische Kopplungsmittel 7.1 ankoppelbar ist oder linksseitig des modularen Roboterbedienhandgeräts 1 an das zweite mechanische Kopplungsmittel 7.2 ankoppelbar ist.

Das erste mechanische Kopplungsmittel 7.1 und das zweite mechanische Kopplungsmittel 7.2 weisen im Falle des vorliegenden Ausführungsbeispiels jeweils ein Formschlusselement 8 auf, welches ausgebildet ist zum axialen Anstecken und axialen Abstecken in Pfeilrichtung P eines Anschlussmoduls 10 in einer Steckrichtung senkrecht zur jeweils zugeordneten Stirnwand 3.1, 3.2 und zum formschlüssigen Arretieren des Anschlussmoduls 10 senkrecht zur Steckrichtung.

Das erste mechanische Kopplungsmittel 7.1 und das zweite mechanische Kopplungsmittel 7.2 sind im Falle des vorliegenden Ausführungsbeispiels jeweils zentral in einem Mittenflächenabschnitt der jeweils zugeordneten Stirnwand 3.1, 3.2 angeordnet und jeweils von einer an der jeweils zugeordneten Stirnwand 3.1, 3.2 ausgebildeten, den jeweiligen Mittenflächenabschnitt umgebenden Stützfläche 9 eingefasst.

Das erste mechanische Kopplungsmittel 7.1 und das zweite mechanische Kopplungsmittel 7.2 werden im Falle des vorliegenden Ausführungsbeispiels jeweils von einem zentralen Dom 11 gebildet, der in einer Vertiefung 12 der jeweils zugeordneten Stirnwand 3.1, 3.2 angeordnet ist und aus dem Grund der Vertiefung 12 nach außen vorspringt.

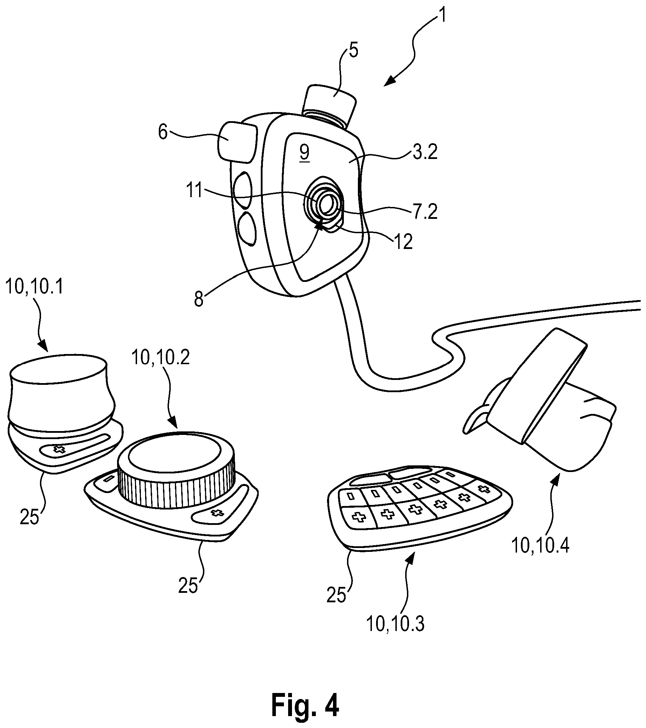

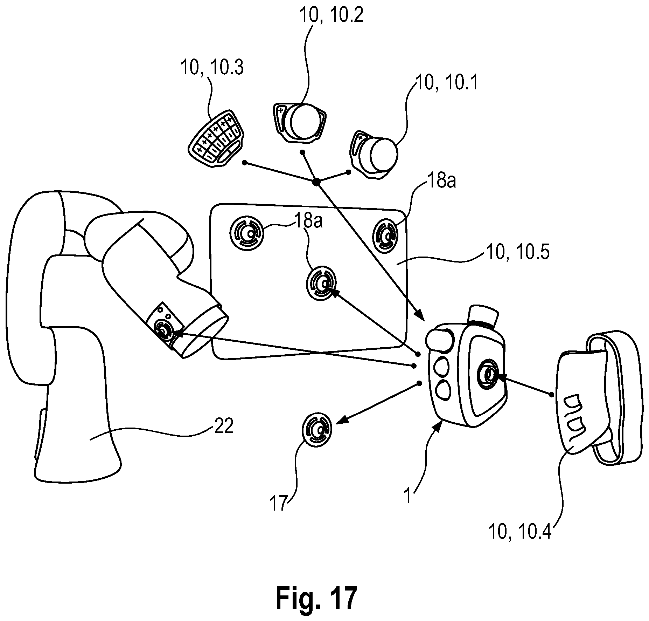

Wie in Fig. 4 und Fig. 17 aufgezeigt ist, kann ein Anschlussmodul 10 als ein vom modularen Roboterbedienhandgerät 1 separates Gerät aus der Gruppe von Geräten umfassend einen Tablet-Computer 10.5, eine Computertastatur 10.3, eine Computermaus, einen Joystick 10.1, Jog-Shuttle 10.2 und einen Jog-Dail, ausgebildet sein und ein Modul-Gehäuse 25 aufweisen, das ein zu dem ersten mechanischen Kopplungsmittel 7.1 und zu dem zweiten mechanischen Kopplungsmittel 7.2 des modularen Roboterbedienhandgeräts 1 formergänzend korrespondierendes Modul-Gegenkopplungsmittel aufweist.

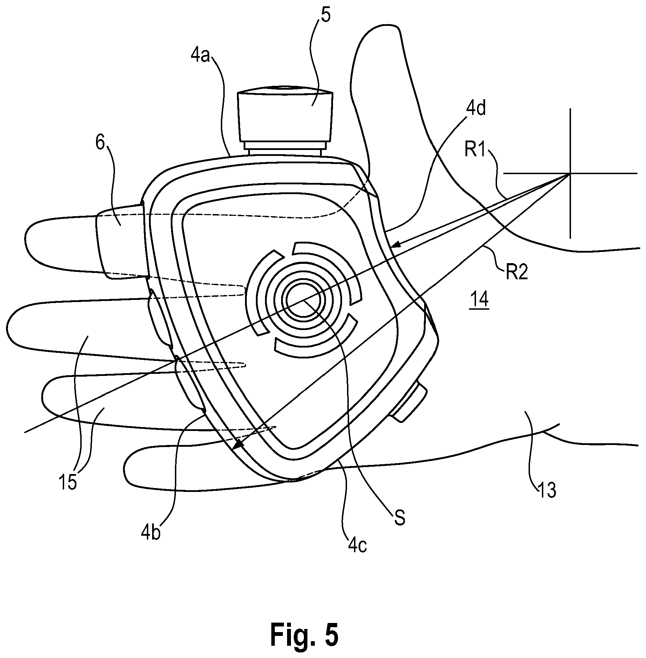

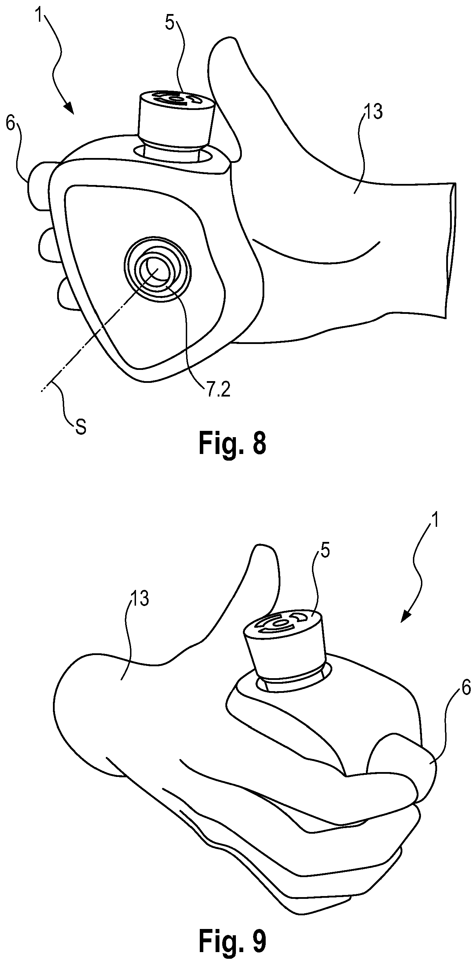

Das erste mechanische Kopplungsmittel 7.1 und das zweite mechanische Kopplungsmittel 7.2 sind im Falle des vorliegenden Ausführungsbeispiels jeweils zu einer senkrecht zur Ebene der jeweils zugeordneten Stirnwand 3.1, 3.2 ausgerichteten Symmetrieachse S (Fig. 5, Fig. 8) rotationssymmetrisch ausgebildet, derart dass das jeweils anzukoppelnde Anschlussmodul 10 in mehreren verschiedenen Drehstellungen an das modulare Roboterbedienhandgerät 1 ankoppelbar ist.

Die Mantelwand 4 weist im Falle des vorliegenden Ausführungsbeispiels einen oberen Mantelaußenflächenabschnitt 4a, einen unteren Mantelaußenflächenabschnitt 4c, einen vorderen konvexen Mantelaußenflächenabschnitt 4b, der einen Fingeranlagebereich bildet, und einen hinteren konkaven Mantelaußenflächenabschnitt 4d, der einen Handballenanlagebereich bildet, auf, wie dies speziell in Fig. 5 näher gezeigt ist.

Die konkave Form, insbesondere ein Krümmungsradius R1 des hinteren konkaven Mantelaußenflächenabschnitts 4d kann an die Form eines Handballens 14 der Hand 13 eines Menschen angepasst sein bzw. dieser entsprechen. In einem solchen Sinne kann auch der vordere konvexe Mantelaußenflächenabschnitt 4b einen Krümmungsradius R2 aufweisen, der an die Lage von teilweise gekrümmten Fingern 15 der Hand 13 eines Menschen angepasst ist bzw. deren Positionen entspricht, wenn das modulare Roboterbedienhandgerät 1 in der Hand 13 gehalten wird. Der vordere konvexe Mantelaußenflächenabschnitt 4b kann insoweit sich koaxial in einem Abstand zum hinteren konkaven Mantelaußenflächenabschnitt 4d erstrecken.

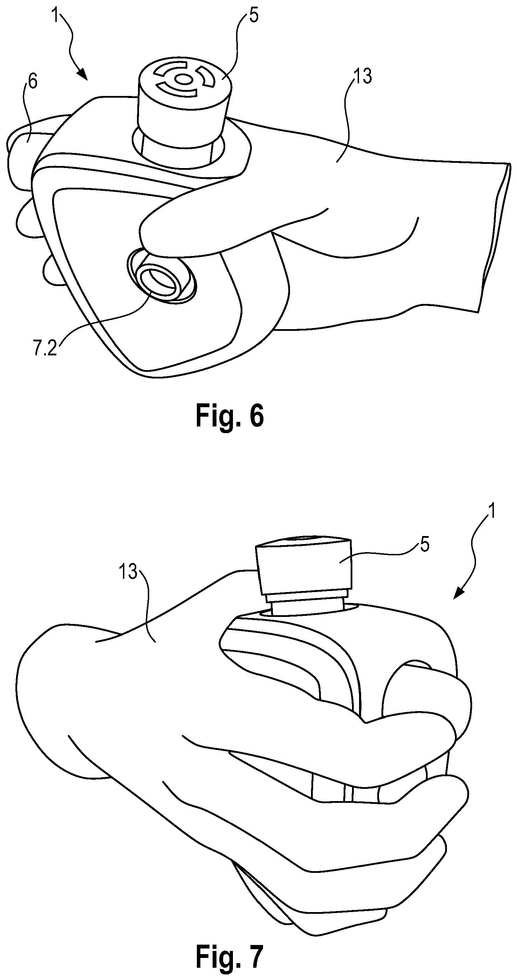

Die Fig. 6 bis Fig. 9 zeigen das modulare Roboterbedienhandgerät 1 beispielsweise in einer rechten Hand 13 einer Person gehalten.

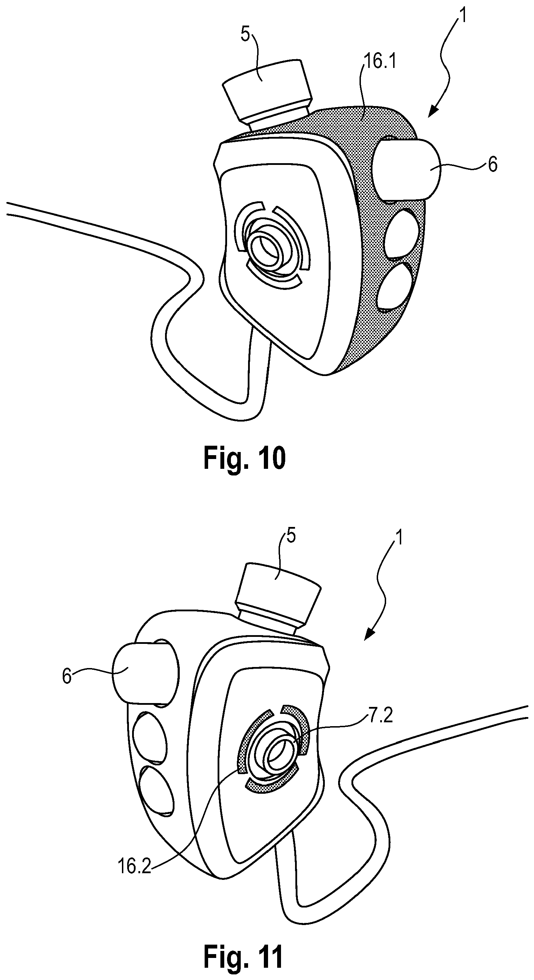

Wie in Fig. 10 und Fig. 11 aufgezeigt ist, kann an der Mantelwand 4 des modularen Roboterbedienhandgeräts 1 wenigstens ein erstes Leuchtmittel 16.1 angeordnet sein und/oder an wenigstens einer der beiden Stirnwände 3.1, 3.2 des modularen Roboterbedienhandgeräts 1 wenigstens ein zweites Leuchtmittel 16.2 angeordnet sein.

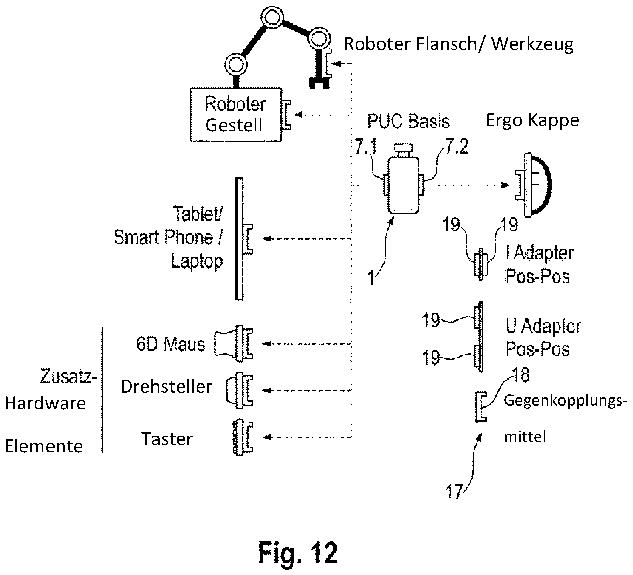

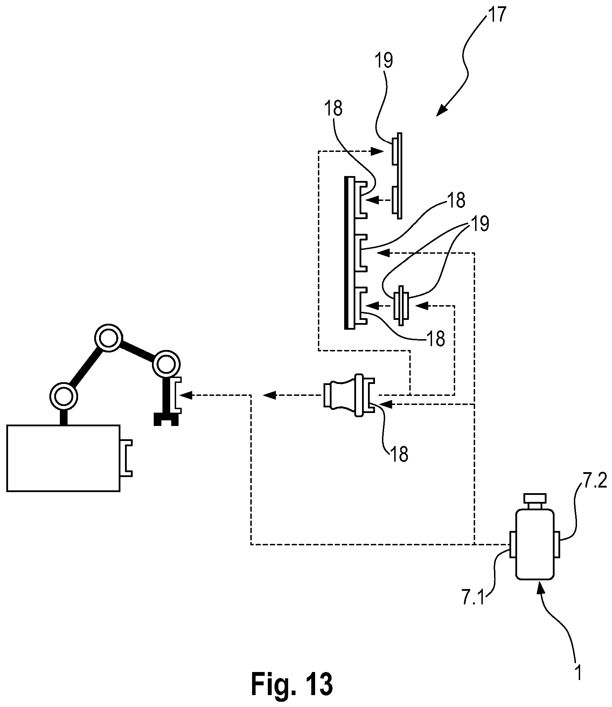

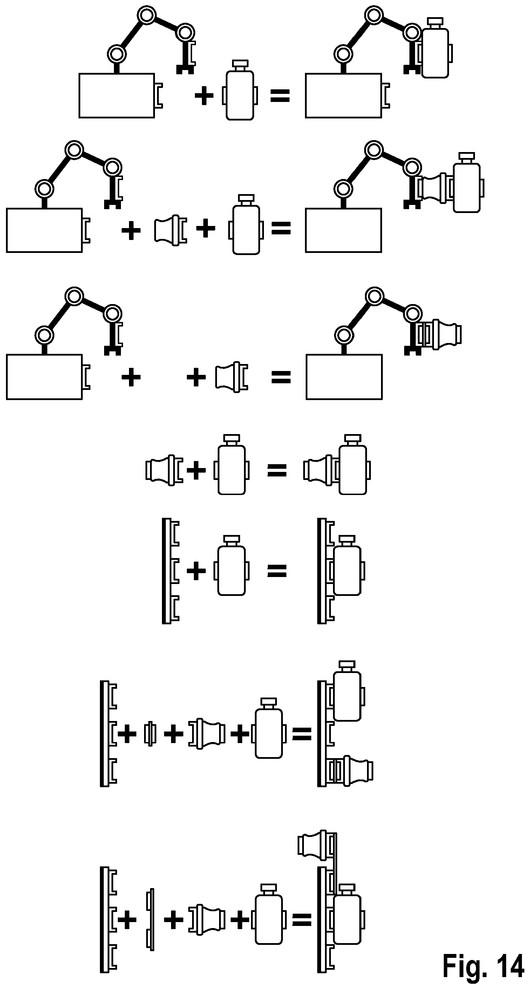

Die Fig. 12 bis Fig. 14 zeigen verschiedene Ausführungsformen von abnehmbaren Adaptern 17, die an dem modularen Roboterbedienhandgerät 1 angekoppelt sein können. Ein solcher Adapter 17 weist ein zu dem ersten mechanischen Kopplungsmittel 7.1 und zu dem zweiten mechanischen Kopplungsmittel 7.2 des modularen Roboterbedienhandgeräts 1 formergänzend korrespondierendes Gegenkopplungsmittel 18 auf. Wenigstens ein weiteres mechanisches Kopplungsmittel 19, das zu dem ersten mechanischen Kopplungsmittel 7.1 und zu dem zweiten mechanischen Kopplungsmittel 7.2 des modularen Roboterbedienhandgeräts 1 identisch ist, ist ebenfalls Teil des Adapters 17.

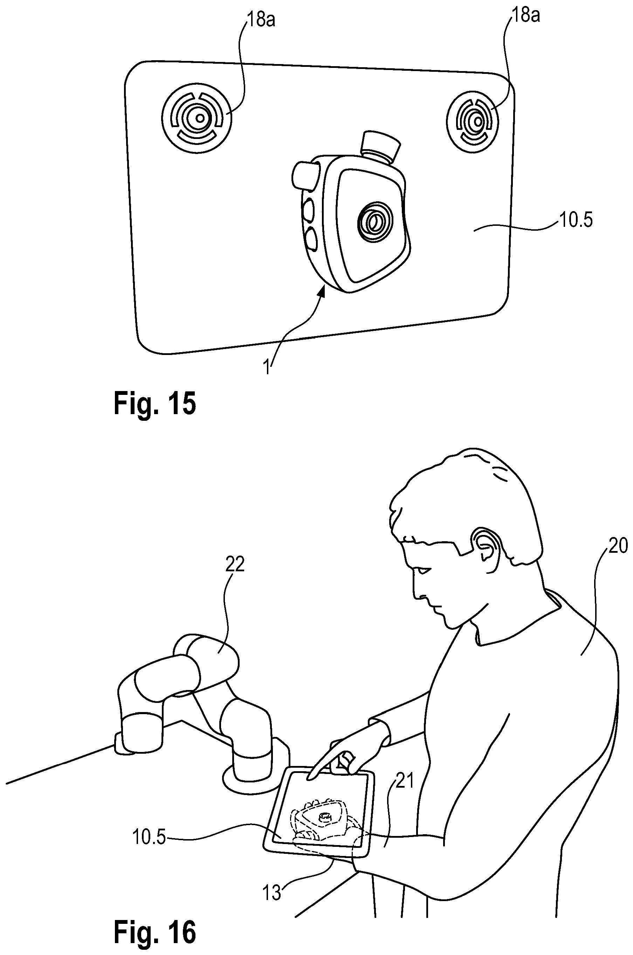

Die Fig. 15 zeigt einen Tablet-Computer 10.5 mit mehreren Gegenkopplungsmitteln 18a, wobei an einem zentralen Gegenkopplungsmittel 18a das modulare Roboterbedienhandgerät 1 angekoppelt ist.

Die Fig. 16 veranschaulicht, wie eine Person 20 beispielsweise mit seiner linken Hand 13 das modulare Roboterbedienhandgerät 1 in der Hand 13 halten kann, wobei aufgrund der Ankoppelung der Tablet-Computer 10.5 getragen werden kann und gegebenenfalls teilweise auf dem Unterarm 21 der Person 20 aufliegen kann. Über den Tablet-Computer 10.5 und das angekoppelte modulare Roboterbedienhandgerät 1 kann beispielsweise ein Roboterarm 22 angesteuert werden.

In Fig. 17 ist veranschaulicht, wie die unterschiedlichen Anschlussmodule 10, 10.1, 10.2, 10.3, 10.4, 10.5 wahlweise an das modulare Roboterbedienhandgerät 1 angekoppelt werden können.

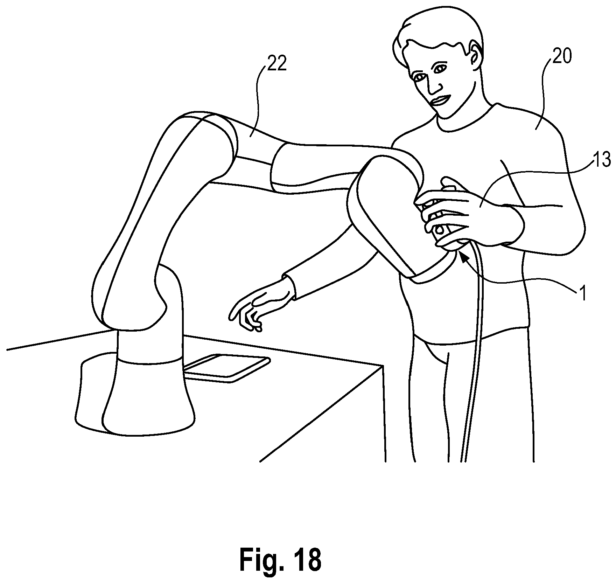

Die Fig. 18 veranschaulicht ein manuelles Handführen eines Roboterarms 22 durch die Person 20, wenn das modulare Roboterbedienhandgerät 1 an ein Glied des Roboterarms 22 angekoppelt ist und die Person 20 den Roboterarm führt, indem das modulare Roboterbedienhandgerät 1 manuell betätigt wird.

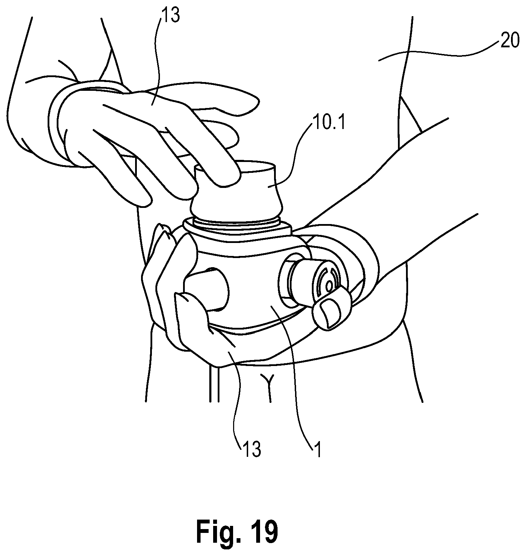

Die Fig. 19 zeigt ein Beispiel, wie ein Anschlussmodul 10 in Form eines Joysticks 10.1 an das modulare Roboterbedienhandgerät 1 angekoppelt sein kann, so dass eine Person 20 das modulare Roboterbedienhandgerät 1 beispielsweise in seiner linken Hand 13 halten kann und mit seiner rechten Hand 13 den Joysticks 10.1 betätigen kann.

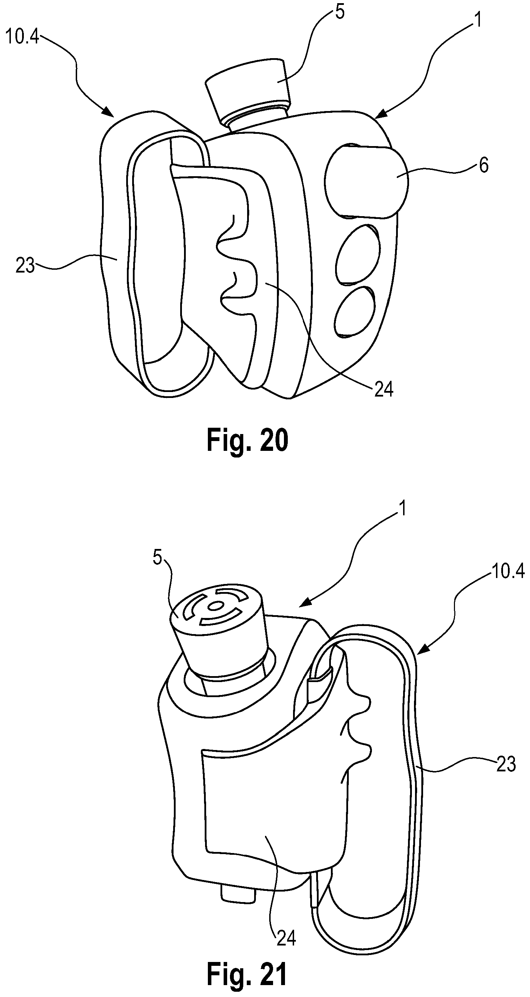

Die Fig. 20 und Fig. 21 zeit das modulare Roboterbedienhandgerät 1 zusammen mit einem Halteband 10.4, welches einen Bandschlaufenabschnitt 23 umfasst, der ausgebildet ist über den Handrücken einer Hand 13 einer Person 20 zu laufen, wenn die Person 20 das modulare Roboterbedienhandgerät 1 in der Hand 13 hält, und der Bandschlaufenabschnitt 23 an ein Anschlussglied 24 angebunden ist, welches ein zu dem ersten mechanischen Kopplungsmittel 7.1 und zu dem zweiten mechanischen Kopplungsmittel 7.2 des modularen Roboterbedienhandgeräts 1 formergänzend korrespondierendes Gegenkopplungsglied aufweist, welches ausgebildet ist, den Bandschlaufenabschnitt 23 an dem modularen Roboterbedienhandgerät 1 zu halten, wenn das Halteband 10.4 an dem modularen Roboterbedienhandgerät 1 befestigt ist.

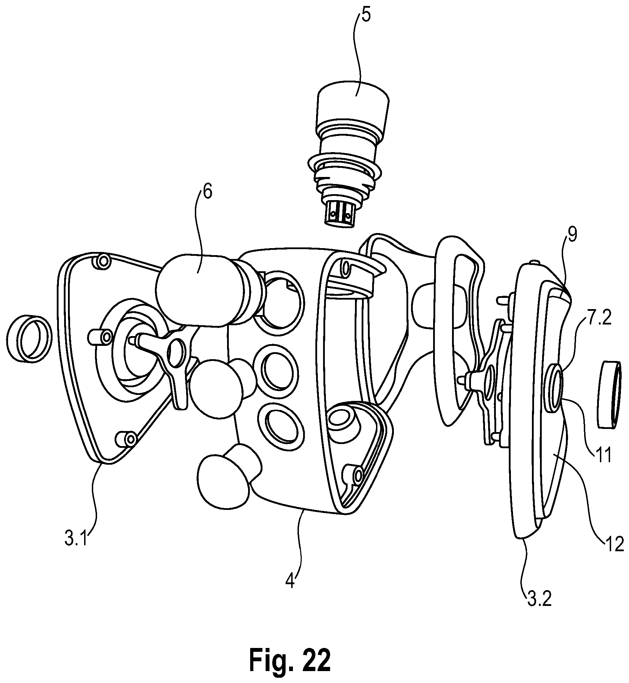

Die Fig. 22 zeigt das modulare Roboterbedienhandgerät 1 nach dem Ausführungsbeispiel nochmals in einer Explosionsdarstellung.

## Patentansprüche

1. Modulares Roboterbedienhandgerät, aufweisend:
- ein Gehäuse (2) mit zwei gegenüberliegenden gleichförmigen Stirnwänden (3.1, 3.2) und einer die beiden Stirnwände (3.1, 3.2) verbindenden Mantelwand (4),
- eine in dem Gehäuse (2) angeordnete Sicherheits-Grundsteuervorrichtung,
- ein an der Mantelwand (4) des Gehäuses (2) angeordnetes Nothalt-Auslösemittel (5), das steuerungstechnisch an die Sicherheits-Grundsteuervorrichtung angeschlossen ist,
- eine an der Mantelwand (4) des Gehäuses (2) angeordnete Zustimmungseinrichtung (6), die steuerungstechnisch an die Sicherheits-Grundsteuervorrichtung angeschlossen ist, **dadurch gekennzeichnet, dass**
- ein an der einen Stirnwand (3.1) ausgebildetes erstes mechanisches Kopplungsmittel (7.1) sowie ein zu dem ersten mechanischen Kopplungsmittel (7.1) identisches, an der anderen Stirnwand (3.2) ausgebildetes zweites mechanisches Kopplungsmittel (7.2), derart, dass ein an das modulare Roboterbedienhandgerät (1) mechanisch anzukoppelndes Anschlussmodul (10) wahlweise rechtsseitig des modularen Roboterbedienhandgeräts (1) an das erste mechanische Kopplungsmittel (7.1) ankoppelbar ist oder linksseitig des modularen Roboterbedienhandgeräts (1) an das zweite mechanische Kopplungsmittel (7.2) ankoppelbar ist und
- das Gehäuse (2) in Gestalt eines allgemeinen, geraden Zylinders ausgebildet ist.

2. Modulares Roboterbedienhandgerät nach Anspruch 1, **dadurch gekennzeichnet, dass** das erste mechanische Kopplungsmittel (7.1) und das zweite mechanische Kopplungsmittel (7.2) jeweils ein Formschlusselement (8) aufweisen, welches ausgebildet ist zum axialen Anstecken und axialen Abstecken eines Anschlussmoduls (10) in einer Steckrichtung senkrecht zur jeweils zugeordneten Stirnwand (3.1, 3.2) und zum formschlüssigen Arretieren des Anschlussmoduls (10) senkrecht zur Steckrichtung.

3. Modulares Roboterbedienhandgerät nach Anspruch 1 oder 2, **dadurch gekennzeichnet, dass** das erste mechanische Kopplungsmittel (7.1) und das zweite mechanische Kopplungsmittel (7.2) jeweils zentral in einem Mittenflächenabschnitt der jeweils zugeordneten Stirnwand (3.1, 3.2) angeordnet sind und jeweils von einer an der jeweils zugeordneten Stirnwand (3.1, 3.2) ausgebildeten, den jeweiligen Mittenflächenabschnitt umgebenden Stützfläche (9) eingefasst sind.

4. Modulares Roboterbedienhandgerät nach einem der Ansprüche 1 bis 3, **dadurch gekennzeichnet, dass** das erste mechanische Kopplungsmittel (7.1) und das zweite mechanische Kopplungsmittel (7.2) jeweils von einem zentralen Dom (11) gebildet werden, der in einer Vertiefung (12) der jeweils zugeordneten Stirnwand (3.1, 3.2) angeordnet ist und aus dem Grund der Vertiefung (12) nach außen vorspringt.

5. Modulares Roboterbedienhandgerät nach einem der Ansprüche 1 bis 4, **dadurch gekennzeichnet, dass** das erste mechanische Kopplungsmittel (7.1) und das zweite mechanische Kopplungsmittel (7.2) jeweils zu einer senkrecht zur Ebene der jeweils zugeordneten Stirnwand (3.1, 3.2) ausgerichteten Symmetrieachse (S) rotationssymmetrisch ausgebildet sind, derart dass das jeweils anzukoppelnde Anschlussmodul (10) in mehreren verschiedenen Drehstellungen an das modulare Roboterbedienhandgerät (1) ankoppelbar ist.

6. Modulares Roboterbedienhandgerät nach einem der Ansprüche 1 bis 5, **dadurch gekennzeichnet, dass** die Mantelwand (4) einen oberen Mantelaußenflächenabschnitt (4a), einen unteren Mantelaußenflächenabschnitt (4c), einen vorderen konvexen Mantelaußenflächenabschnitt (4b), der einen Fingeranlagebereich bildet, und einen hinteren konkaven Mantelaußenflächenabschnitt (4d), der einen Handballenanlagebereich bildet, aufweist.

7. Modulares Roboterbedienhandgerät nach einem der Ansprüche 1 bis 6, aufweisend einen abnehmbaren Adapter (17), welcher ein zu dem ersten mechanischen Kopplungsmittel (7.1) und zu dem zweiten mechanischen Kopplungsmittel (7.2) des modularen Roboterbedienhandgeräts (1) formergänzend korrespondierendes Gegenkopplungsmittel (18) aufweist, und welcher wenigstens ein weiteres mechanisches Kopplungsmittel (19) aufweist, das zu dem ersten mechanischen Kopplungsmittel (7.1) und zu dem zweiten mechanischen Kopplungsmittel (7.2) des modularen Roboterbedienhandgeräts (1) identisch ist.

8. Modulares Roboterbedienhandgerät nach einem der Ansprüche 1 bis 7, **dadurch gekennzeichnet, dass** an der Mantelwand (4) des modularen Roboterbedienhandgeräts (1) wenigstens ein erstes Leuchtmittel (16.1) angeordnet ist und/oder an wenigstens einer der beiden Stirnwände (3.1, 3.2) des modularen Roboterbedienhandgeräts (1) wenigstens ein zweites Leuchtmittel (16.2) angeordnet ist.

9. Modulares Roboterbedienhandgerät nach einem der Ansprüche 1 bis 8, aufweisend ein Halteband (10.4), welches einen Bandschlaufenabschnitt (23) umfasst, der ausgebildet ist über den Handrücken einer Hand (13) einer Person (20) zu laufen, wenn die Person (20) das modulare Roboterbedienhandgerät (1) in der Hand (13) hält, und der Bandschlaufenabschnitt (23) an ein Anschlussglied (24) angebunden ist, welches ein zu dem ersten mechanischen Kopplungsmittel (7.1) und zu dem zweiten mechanischen Kopplungsmittel (7.2) des modularen Roboterbedienhandgeräts (1) formergänzend korrespondierendes Gegenkopplungsglied aufweist, welches ausgebildet ist, den Bandschlaufenabschnitt (23) an dem modularen Roboterbedienhandgerät (1) zu halten, wenn das Halteband (10.4) an dem modularen Roboterbedienhandgerät (1) befestigt ist.

## Claims

1. Modular hand-held robot operating device, having:
- a housing (2) with two opposite uniform end walls (3.1, 3.2) and a lateral wall (4) connecting the two end walls (3.1, 3.2),
- a safety basic-control apparatus, arranged in the housing (2),
- an emergency-stop triggering means (5), arranged on the lateral wall (4) of the housing (2) and connected for control purposes to the safety basic-control apparatus,
- an enabling device (6), arranged on the lateral wall (4) of the housing (2) and connected for control purposes to the safety basic-control apparatus, **characterized in that**
- a first mechanical coupling means (7.1), formed on one end wall (3.1), and a second mechanical coupling means (7.2), identical to the first mechanical coupling means (7.1) and formed on the other end wall (3.2), such that a connection module (10) that can be mechanically coupled to the modular hand-held robot operating device (1) can, according to choice, be coupled to the first mechanical coupling means (7.1) on the right-hand side of the modular hand-held robot operating device (1) or be coupled to the second mechanical coupling means (7.2) on the left-hand side of the modular hand-held robot operating device (1) and
- the housing (2) takes the form of a general, straight cylinder.

2. Modular hand-held robot operating device according to Claim 1, **characterized in that** the first mechanical coupling means (7.1) and the second mechanical coupling means (7.2) have in each case an interlocking element (8), which is designed for the axial plugging-on and axial unplugging of a connection module (10) in a plugging direction perpendicular to the respectively assigned end wall (3.1, 3.2) and for the interlocking arresting of the connection module (10) perpendicularly to the plugging direction.

3. Modular hand-held robot operating device according to Claim 1 or 2, **characterized in that** the first mechanical coupling means (7.1) and the second mechanical coupling means (7.2) are in each case arranged centrally in a middle surface portion of the respectively assigned end wall (3.1, 3.2) and are in each case enclosed by a supporting surface (9) formed on the respectively assigned end wall (3.1, 3.2) and surrounding the respective middle surface portion.

4. Modular hand-held robot operating device according to one of Claims 1 to 3, **characterized in that** the first mechanical coupling means (7.1) and the second mechanical coupling means (7.2) are in each case formed by a central boss (11), which is arranged in a depression (12) of the respectively assigned end wall (3.1, 3.2) and projects outwards from the base of the depression (12).

5. Modular hand-held robot operating device according to one of Claims 1 to 4, **characterized in that** the first mechanical coupling means (7.1) and the second mechanical coupling means (7.2) are in each case formed rotationally symmetrical to an axis of symmetry (S) aligned perpendicularly to the plane of the respectively assigned end wall (3.1, 3.2), such that the connection module (10) to be coupled on in each case can be coupled onto the modular hand-held robot operating device (1) in different rotational positions.

6. Modular hand-held robot operating device according to one of Claims 1 to 5, **characterized in that** the lateral wall (4) has an upper lateral outer-surface portion (4a), a lower lateral outer-surface portion (4c), a front convex lateral outer-surface portion (4b), which forms a finger-bearing area, and a rear concave lateral outer-surface portion (4d), which forms a palm-bearing area.

7. Modular hand-held robot operating device according to one of Claims 1 to 6, having a removable adapter (17), which has, complementing the form of the first mechanical coupling means (7.1) and the second mechanical coupling means (7.2) of the modular hand-held robot operating device (1), a corresponding counter-coupling means (18), and which has at least one further mechanical coupling means (19), which is identical to the first mechanical coupling means (7.1) and the second mechanical coupling means (7.2) of the modular hand-held robot operating device (1).

8. Modular hand-held robot operating device according to one of Claims 1 to 7, **characterized in that** at least one first lighting means (16.1) is arranged on the lateral wall (4) of the modular hand-held robot operating device (1) and/or at least one second lighting means (16.2) is arranged on at least one of the two end walls (3.1, 3.2) of the modular hand-held robot operating device (1).

9. Modular hand-held robot operating device according to one of Claims 1 to 8, having a holding strap (10.4), which comprises a strap-loop portion (23), which is designed to run over the back of a hand (13) of a person (20) when the person (20) is holding the modular hand-held robot operating device (1) in the hand (13), and the strap-loop portion (23) is attached to a connection element (24), which has, complementing the form of the first mechanical coupling means (7.1) and the second mechanical coupling means (7.2) of the modular hand-held robot operating device (1), a corresponding counter-coupling element, which is designed to hold the strap-loop portion (23) on the modular hand-held robot operating device (1) when the holding strap (10.4) is fastened to the modular hand-held robot operating device (1) .

## Revendications

1. Dispositif portatif modulaire de commande de robot, comprenant :
- un boîtier (2) présentant deux parois d'extrémité de mêmes formes et opposées (3.1, 3.2) et une paroi d'enveloppe (4) reliant les deux parois d'extrémité (3.1, 3.2),
- un dispositif de commande de base de sécurité disposé dans le boîtier (2),
- un moyen de déclenchement d'arrêt d'urgence (5) disposé sur la paroi d'enveloppe (4) du boîtier (2), qui est relié par technique de commande au dispositif de commande de base de sécurité,
- un dispositif d'approbation (6), qui est disposé sur la paroi d'enveloppe (4) du boîtier (2) et qui est relié par technique de commande au dispositif de commande de base de sécurité, **caractérisé en ce que**
- un premier moyen d'accouplement mécanique (7.1) formé sur une paroi d'extrémité (3.1) et un second moyen d'accouplement mécanique (7.2), identique au premier moyen d'accouplement mécanique (7.1), formé sur l'autre paroi d'extrémité (3.2), de telle sorte qu'un module de connexion (10) à accoupler mécaniquement au dispositif portatif modulaire de commande de robot (1) peut être accouplé, au choix, au premier moyen d'accouplement mécanique (7.1) sur le côté droit du dispositif portatif modulaire de commande de robot (1) ou au second moyen d'accouplement mécanique (7.2) sur le côté gauche du dispositif portatif modulaire de commande de robot (1), et
- le boîtier (2) est conçu sous la forme d'un cylindre globalement droit.

2. Dispositif portatif modulaire de commande de robot selon la revendication 1, **caractérisé en ce que** le premier moyen d'accouplement mécanique (7.1) et le second moyen d'accouplement mécanique (7.2) comportent respectivement un élément de liaison par complémentarité de formes (8) conçu pour le branchement axial et le débranchement axial d'un module de raccordement (10) dans une direction d'enfichage perpendiculaire à la paroi d'extrémité (3.1, 3.2) associée respective et pour le verrouillage par complémentarité de formes du module de raccordement (10) perpendiculairement à la direction d'enfichage.

3. Dispositif portatif modulaire de commande de robot selon la revendication 1 ou 2, **caractérisé en ce que** le premier moyen d'accouplement mécanique (7.1) et le second moyen d'accouplement mécanique (7.2) sont respectivement disposés au centre d'une section de surface centrale de la paroi d'extrémité (3.1, 3.2) respective associée, et sont respectivement encadrés par une surface d'appui (9) formée sur la paroi d'extrémité (3.1, 3.2) respective associée et entourant la section de surface centrale respective.

4. Dispositif portatif modulaire de commande de robot selon l'une des revendications 1 à 3, **caractérisé en ce que** le premier moyen d'accouplement mécanique (7.1) et le second moyen d'accouplement mécanique (7.2) sont respectivement formés par un dôme central (11) qui est disposé dans un creux (12) de la paroi d'extrémité (3.1, 3.2) associée respective et fait saillie vers l'extérieur à partir du fond du creux (12).

5. Dispositif portatif modulaire de commande de robot selon l'une des revendications 1 à 4, **caractérisé en ce que** le premier moyen d'accouplement mécanique (7.1) et le second moyen d'accouplement mécanique (7.2) sont respectivement réalisés de manière symétrique de rotation par rapport à un axe de symétrie (S) orienté perpendiculairement au plan de la paroi d'extrémité (3.1, 3.2) respectivement associée, de sorte que le module de raccordement (10) à accoupler respectivement peut être accouplé au dispositif portatif modulaire de commande de robot (1) dans plusieurs positions de rotation différentes.

6. Dispositif portatif modulaire de commande de robot selon l'une des revendications 1 à 5, **caractérisé en ce que** la paroi d'enveloppe (4) présente une partie de surface extérieure d'enveloppe supérieure (4a), une partie de surface extérieure d'enveloppe inférieure (4c), une partie de surface extérieure d'enveloppe convexe avant (4b) formant une zone de butée de doigt et une partie de surface extérieure d'enveloppe concave arrière (4d) formant une zone de paume.

7. Dispositif portatif modulaire de commande de robot selon l'une des revendications 1 à 6, comportant un adaptateur amovible (17) qui comporte un moyen d'accouplement complémentaire (18) correspondant en forme au premier moyen d'accouplement mécanique (7.1) et au second moyen d'accouplement mécanique (7.2) du dispositif portatif modulaire de commande de robot (1), et qui comporte au moins un autre moyen d'accouplement mécanique (19) identique au premier moyen d'accouplement mécanique (7.1) et au second moyen d'accouplement mécanique (7.2) du dispositif portatif modulaire de commande de robot (1).

8. Dispositif portatif modulaire de commande de robot selon l'une des revendications 1 à 7, **caractérisé en ce qu'**au moins un premier moyen d'éclairage (16.1) est disposé sur la paroi d'enveloppe (4) du dispositif portatif modulaire de commande de robot (1) et/ou **en ce qu'**au moins un second moyen d'éclairage (16.2) est disposé sur au moins l'une des deux parois d'extrémité (3.1, 3.2) du dispositif portatif modulaire de commande de robot (1).

9. Dispositif portatif modulaire de commande de robot selon l'une des revendications 1 à 8, comportant une sangle de retenue (10.4) qui comprend une section de boucle de sangle (23) qui est conçue pour passer sur le dos de la main (13) d'une personne (20) lorsque la personne (20) tient le dispositif portatif modulaire de commande de robot (1) dans la main (13), et la section de boucle de sangle (23) étant reliée à un élément de fixation (24) qui comporte un élément d'accouplement complémentaire correspondant en forme au premier moyen d'accouplement mécanique (7.1) et au second moyen d'accouplement mécanique (7.2) du dispositif portatif modulaire de commande de robot (1), lequel élément d'accouplement complémentaire est conçu pour maintenir la section de boucle de sangle (23) sur le dispositif portatif modulaire de commande de robot (1) lorsque la sangle de retenue (10.4) est fixée au dispositif portatif modulaire de commande de robot (1).
